# EUROPEAN PATENT SPECIFICATION

(11) **EP 2 705 081 B1**
(45) Date of publication and mention of the grant of the patent: **19.08.2015**
(21) Application number: 12719165.8
(22) Date of filing: 19.04.2012
(51) Int. Cl.: C08K 5/098, C08K 5/20, C08L 67/02, C08K 5/06, C08K 5/10

(54) **ACTIVATED OXYGEN SCAVENGING COMPOSITIONS FOR PLASTIC CONTAINERS**
AKTIVIERTE SAUERSTOFFABSORPTIONSZUSAMMENSETZUNGEN FÜR KUNSTSTOFFBEHÄLTER
COMPOSITIONS DE CAPTURE D'OXYGÈNE ACTIVÉ POUR RÉCIPIENTS EN PLASTIQUE

(30) Priority: 06.05.2011 US 201113102747
(43) Date of publication of application: 12.03.2014
(73) Proprietor: Graham Packaging Company, L.P., York, PA 17402 (US)
(72) Inventor: AKKAPEDDI, Murali, K., York, PA 17408 (US); LYNCH, Brian, A., Merrimack, NH 03054 (US); ZHONG, Yang, York, PA 17403 (US)
(74) Representative: De Anna, Pier Luigi
(86) International application number: PCT/US2012/034235
(87) International publication number: WO 2012/154379

(56) References cited:
- US-A1- 2006 148 957
- US-A1- 2006 180 790

## Description

### BACKGROUND OF THE INVENTION

The present invention relates to compositions useful for oxygen scavenging. The invention also relates to substantially transparent compositions that comprise a base polymer, an oxidizable organic component, a transition metal, and an activator compound. The invention also is directed to uses of such compositions in the construction of packaging for oxygen sensitive materials.

All references, including publications, patent applications, and patents, cited herein are hereby incorporated by reference to the same extent as if each reference were individually and specifically indicated to be incorporated by reference and were set forth in its entirety herein.

It is known in the art to include an oxygen scavenger in the packaging structure for the protection of oxygen sensitive materials. Such scavengers are believed to react with oxygen that is trapped in the package or that permeates from outside of the package, thus extending to life of package contents. These packages include films, bottles, containers, and the like. Food, beverages (such as beer and fruit juices), cosmetics, medicines, and the like are particularly sensitive to oxygen exposure and require high barrier properties to oxygen to preserve the freshness of the package contents and avoid changes in flavor, texture and color.

Use of certain polyamides in combination with a transition metal is known to be useful as the oxygen scavenging material. One particularly useful polyamide is MXD6 which contains meta-xylene residues in the polymer chain. See, for example, U.S. Pat. Nos. 5,639,815; 5,049,624; and 5,021,515.

Other oxygen scavengers include potassium sulfite (U.S. Pat. No. 4,536,409), unsaturated hydrocarbons (U.S. Pat. No. 5,211,875), and ascorbic acid derivatives (U.S. Pat. No. 5,075,362).

U.S.Pat. Nos. 6,083,585 and 6,558,762 to Cahill disclose the oxygen scavenging polyester compositions wherein the oxygen scavenging component is polybutadiene and the catalyst for the oxygen scavenging material is transition metal salts.

U.S. Pat. 6,423,776 to Akkapeddi discloses the use of oxidizable polydienes or oxidizable polyethers as oxygen scavengers in blends with polyamides.

U.S.Pat. 6,254,803 to Ching discloses the use of polymers having at least one cyclohexenyl group or functionality as oxygen scavengers.

U.S. 2006/180790 discloses a composition comprising a polyester base polymer, 0,1-10wt% of a non polymeric oxidable organic compound, and a transition metal in a positive oxidation state, the metal bein present at 10-400 ppm.

In barrier layers of packaging walls that are made from blends of a polymeric oxygen scavenging material such as that described in all of the above prior art, in a base polymer resin such as PET, an undesirable haze can result due to the immiscibility of the polymeric scavenging materials in PET. It is a well known fact that blends of polymers of dissimilar chemical structures invariably results in phase separation due their mutual segmental incompatibility. Phase separation is the root cause for the haze in such blends.

One approach to minimize the haze in polymer blends is the use of compatibilizers or interfacial agents which improve the dispensability of the polymeric scavenger in the base polymer. However this approach, while it may reduce somewhat, does not eliminate the haze and hence the desired high clarity is not achievable. Thus, there is a need in the art for improved materials such as low molecular weight organic compounds which provide high oxygen scavenging capability when blended into PET to form containers while maintaining substantial transparency. In principle, low molecular weight organic compounds are capable of being miscible in base polymers such as PET due to their molecular size allowing them to penetrate into the free volume that exists between the base polymer chain segments.

Besides appearance, another problem experienced with prior art oxygen scavengers is that once they are incorporated into plastic containers, they require an induction period (i.e., time delay) before the onset of oxygen scavenging. For example, molded containers that employ diamides such as, for example, dibenzyl adipamide (DBA) as oxygen scavengers, the induction period can be at least three months at ambient temperature and humidity or at least four weeks at elevated temperature (38°C) and humidity (85% RH) after the bottles are filled with deoxygenated water. This induction period is not acceptable in real commercial practice where plastic containers are made and filled immediately (or shortly thereafter) with an oxygen-sensitive food or beverage product. The oxygen scavenging must occur immediately after filling to protect the taste and nutrient qualities of the food and/or beverage products contained within.

Thus, there is a need in the art for effective oxygen scavenging compositions that satisfy container clarity requirements and eliminate any induction period for oxygen scavenging such that prolonged aging or conditioning of formed containers is not needed.

### BRIEF SUMMARY OF THE INVENTION

The present invention provides a composition comprising: a) a polyester base polymer; b) at least one non-polymeric oxidizable organic compound selected from the group consisting of: a compound of formula (I) or (II): 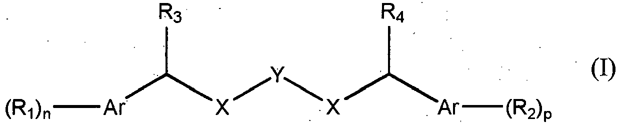 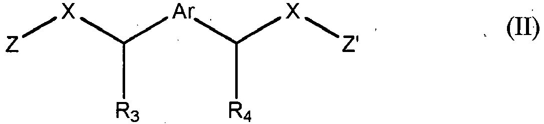 wherein, Ar is aryl or heteroaryl;
X is 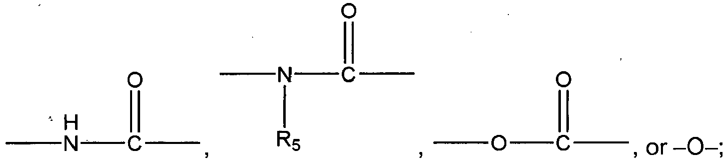 Y is alkylene, cycloalkylene, or arylene;
R₁ and R₂ are each independently H or alkyl;
R₃ and R₄ are each independently H, alky, cycloalkyl, aryl, or aralkyl;
R₅ is alkyl, cycloalkyl, or aryl;
Z and Z' are each independently H, alkyl, cycloalkyl, aryl, or aralkyl; and
n and p are each independently 0, 1, 2, 3, 4, or 5;
and a compound of Formula III or IV: 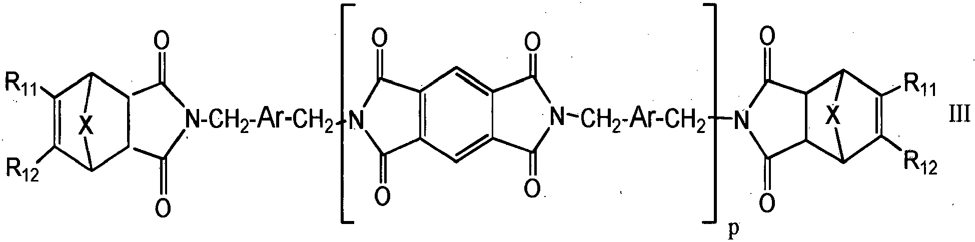 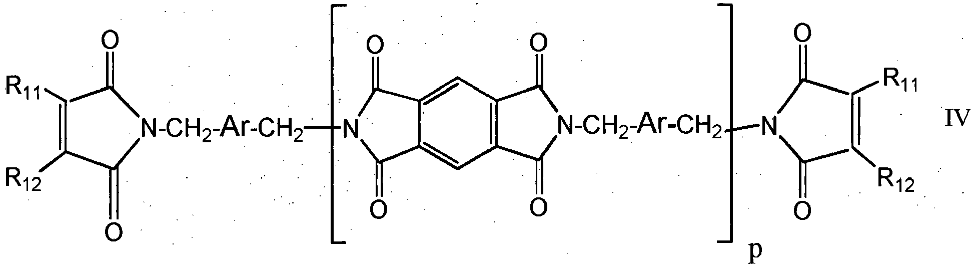 wherein,
Ar is an o-, m-, or p-phenylene moiety, a substituted phenylene moiety, or a naphthalene moiety; R₁₁ and R₁₂ are independently selected from the group consisting of: hydrogen, alkyl, alkenyl, and aryl; X is O or - (CH₂)ₙ-; n = 0, 1, or 2; and p = 0, 1, or 2;
c) at least one transition metal in a positive oxidation state, said metal being present in the composition in an amount of from 10 to 400 ppm; and
d) at least one activator compound selected from the group consisting of:
   (i) a polyester ionomer containing a sulfoisophthalate moiety,
   (ii) a polyol derivative and
   (iii) a N-hydroxyimide, wherein the at least one non-polymeric oxidizable organic compound is present in an amount of from 0.10 to 10 weight percent of the composition, and wherein the at least one activator compound is present in an amount of from 0.01 to 5 weight percent of the composition.

In another embodiment, the present invention provides a wall for a package comprising at least one layer, said layer comprising a composition, said composition comprising: a) a polyester base polymer; b) at least one non-polymeric oxidizable organic compound selected from the group consisting of: a compound of formula (I) or (II): 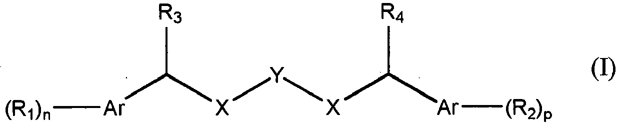 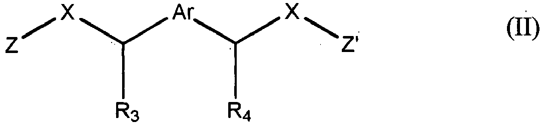 wherein, Ar is aryl or heteroaryl;
X is 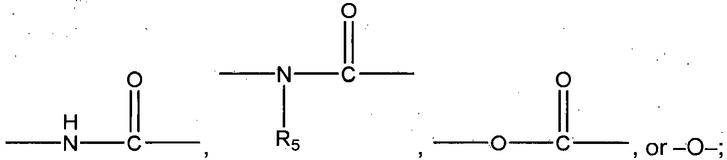 Y is alkjrlene, cycloalkylene, or arylene;
R₁ and R₂ are each independently H or alkyl;
R₃ and R₄ are each independently H, alky, cycloalkyl, aryl, or aralkyl;
R₅ is alkyl, cycloalkyl, or aryl;
Z and Z' are each independently H, alkyl, cycloalkyl, aryl, or aralkyl; and
n and p are each independently 0, 1, 2, 3, 4, or 5;
and a compound of Formula III or IV: 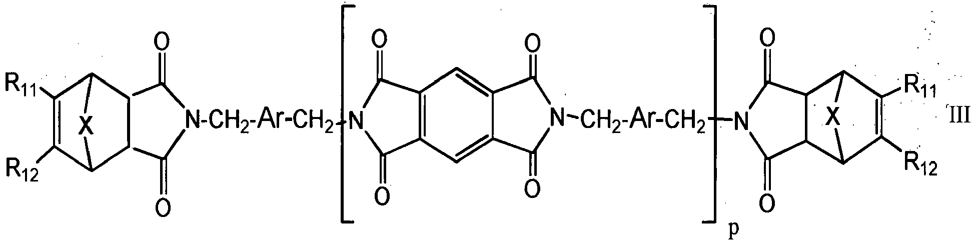 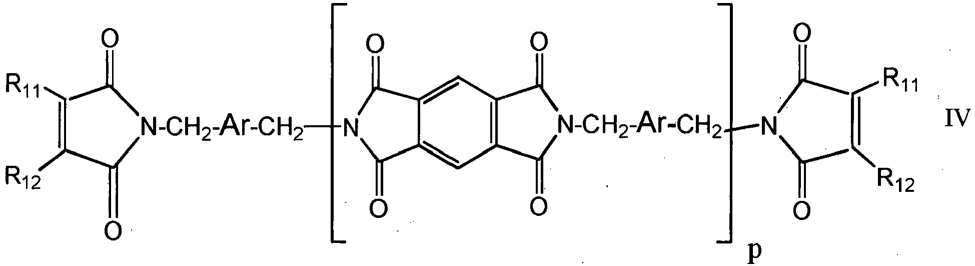 wherein,
Ar is an o-, m-, or p-phenylene moiety, a substituted phenylene moiety, or a naphthalene moiety; R₁₁ and R₁₂ are independently selected from the group consisting of: hydrogen, alkyl, alkenyl, and aryl; X is O or - (CH₂)ₙ-; n = 0, 1, or 2; and p = 0, 1, or 2;
c) at least one transition metal in a positive oxidation state, said metal being present in the composition in an amount of from 10 to 400 ppm; and
d) at least one activator compound selected from the group consisting of:
   (i) a polyester ionomer containing a sulfoisophthalate moiety,
   (ii) a polyol derivative, and
   (iii) a N-hydroxyimide, wherein the at least one non-polymeric oxidizable organic compound is present in an amount of from 0.10 to 10 weight percent of the composition, and wherein the at least one activator compound is present in an amount of from 0.01 to 5 weight percent of the composition.

### BRIEF DESCRIPTION OF THE DRAWINGS

FIG. 1 is a graph illustrating comparative oxygen scavenging activity of compositions of the present invention versus a control;
FIG. 2 is a graph illustrating comparative oxygen scavenging activity of compositions of the present invention versus a control;
FIG. 3 is a graph illustrating comparative oxygen scavenging activity of compositions of the present invention versus a control;
FIG. 4 is a proton NMR spectra of an oxygen scavenging compound for use in the present invention;
FIG. 5 is a proton NMR spectra of an oxygen scavenging compound for use in the present invention;
FIG. 6 is a graph illustrating comparative oxygen scavenging activity of compositions of the present invention versus a control; and
FIG. 7 is a graph illustrating comparative oxygen scavenging activity of compositions of the present invention versus a control.

### DETAILED DESCRIPTION OF THE INVENTION

The present invention concerns compositions that are useful in the manufacture of packaging for oxygen sensitive materials. In some embodiments, the compositions of the present invention comprise a polyester base polymer, a non-polymeric oxidizable organic component, a transition metal in a positive oxidation state, and an activator compound, wherein the composition exhibits excellent oxygen scavenging properties as well as excellent clarity (i.e., lack of haze) when blow molded, for example, from a preform into a monolayer container via an injection stretch blow molding process. In the absence of the activator compound, the composition would require an induction period prior to any significant oxygen scavenging.

Compositions of the instant invention comprise at least one base polymer. As used herein, the term "base polymer" refers to a polymer component of a container of the present invention that provides the structure and mechanical properties of the container. The term "base polymer" is synonymous with the term "structural polymer," which is commonly used in the art.

In preferred embodiments, the base polymer is a polyester. In certain embodiments, the polyester polymers of the invention are thermoplastic and, thus, the form of the compositions are not limited and can include a composition in the melt phase polymerization, as an amorphous pellet, as a solid stated polymer, as a semi-crystalline particle, as a composition of matter in a melt processing zone, as a bottle preform, or in the form of a stretch blow molded bottle or other articles. In certain preferred embodiments, the polyester is polyethylene terephthalate (PET).

Examples of suitable polyester polymers include polyethylene terephthalate homopolymers and copolymers modified with one or more polycarboxylic acid modifiers in a cumulative amount of less than 15 mole %, or 10 mole % or less, or 8 mole % or less, or one or more hydroxyl compound modifiers in an amount of less than 60 mol %, or less than 50 mole %, or less than 40 mole %, or less than 15 mole %, or 10 mole % or less, or 8 mole % or less (collectively referred to for brevity as "PET") and polyethylene naphthalate homopolymers and copolymers modified with a cumulative amount of with less than 15 mole %, or 10 mole % or less, or 8 mole % or less, of one or more polycarboxylic acid modifiers or modified less than 60 mol %, or less than 50 mole %, or less than 40 mole %, or less than 15 mole %, or 10 mole % or less, or 8 mole % or less of one or more hydroxyl compound modifiers (collectively referred to herein as "PEN"), and blends of PET and PEN. A modifier polycarboxylic acid compound or hydroxyl compound is a compound other than the compound contained in an amount of at least 85 mole %. The preferred polyester polymer is polyalkylene terephthalate, and most preferred is PET.

In some embodiments, the polyester polymer contains at least 90 mole % ethylene terephthalate repeat units, and in other embodiments, at least 92 mole %, and in yet other embodiments, or at least 94 mole %, based on the moles of all repeat units in the polyester polymers.

In addition to a diacid component of terephthalic acid, derivates of terephthalic acid, naphthalene-2,6-dicarboxylic acid, derivatives of naphthalene-2,6-dicarboxylic acid, or mixtures thereof, the polycarboxylic acid component(s) of the present polyester may include one or more additional modifier polycarboxylic acids. Such additional modifier polycarboxylic acids include aromatic dicarboxylic acids preferably having 8 to 14 carbon atoms, aliphatic dicarboxylic acids preferably having 4 to 12 carbon atoms, or cycloaliphatic dicarboxylic acids preferably having 8 to 12 carbon atoms.

Examples of modifier dicarboxylic acids useful as an acid component(s) are phthalic acid, isophthalic acid, naphthalene-2,6-dicarboxylic acid, cyclohexanedicarboxylic acid, cyclohexanediacetic acid, diphenyl-4,4'-dicarboxylic acid, succinic acid, glutaric acid, adipic acid, azelaic acid, sebacic acid, and the like, with isophthalic acid, naphthalene-2,6-dicarboxylic acid, and cyclohexanedicarboxylic acid being most preferable. It should be understood that use of the corresponding acid anhydrides, esters, and acid chlorides of these acids is included in the term "polycarboxylic acid." It is also possible for trifunctional and higher order polycarboxylic acids to modify the polyester.

The hydroxyl component is made from compounds containing 2 or more hydroxyl groups capable of reacting with a carboxylic acid group. In some preferred embodiments, preferred hydroxyl compounds contain 2 or 3 hydroxyl groups. Certain preferred embodiments, have 2 hydroxyl groups. These hydroxyl compounds include C₂-C₄ alkane diols, such as ethylene glycol, propane diol, and butane diol, among which ethylene glycol is most preferred for container applications. In addition to these diols, other modifier hydroxyl compound component(s) may include diols such as cycloaliphatic diols preferably having 6 to 20 carbon atoms and/or aliphatic diols preferably having 3 to 20 carbon atoms. Examples of such diols include diethylene glycol; triethylene glycol; 1,4-cyclohexanedimethanol; propane-1,3-diol and butane-1,4-diol (which are considered modifier diols if ethylene glycol residues are present in the polymer in an amount of at least 85 mole % based on the moles of all hydroxyl compound residues); pentane-1,5-diol; hexane-1,6-diol; 3-methylpentanediol-(2,4); neopentyl glycol; 2-methylpentanediol-(1,4); 2,2,4-trimethylpentane-diol-(1;3); 2,5-ethylhexanediol-(1,3); 2,2-diethyl propane-diol-(1,3); hexanediol-(1,3); 1,4-di-(hydroxyethoxy)-benzene; 2,2-bis-(4-hydroxycyclohexyl)-propane; 2,4-dihydroxy-1,1,3,3-tetramethyl-cyclobutane; 2,2-bis-(3-hydroxyethoxyphenyl)-propane; and 2,2-bis-(4-hydroxypropoxyphenyl)-propane. Typically, polyesters such as polyethylene terephthalate are made by reacting a glycol with a dicarboxylic acid as the free acid or its dimethyl ester to produce an ester monomer and/or oligomers, which are then polycondensed to produce the polyester.

In some preferred embodiments, modifiers include isophthalic acid, naphthalenic dicarboxylic acid, trimellitic anhydride, pyromellitic dianhydride, 1,4-cyclohexane dimethanol, and diethylene glycol. The amount of the polyester polymer in the formulated polyester polymer composition ranges from greater than 50.0 wt. %, or from 80.0 wt. %, or from 90.0 wt. %, or from 95.0 wt. %, or from 96.0 wt. %, or from 97 wt. %, and up to 99.90 wt. %, based on the combined weight of all polyester polymers and all polyamide polymers. The formulated polyester polymer compositions may also include blends of formulated polyester polymer compositions with other thermoplastic polymers such as polycarbonate. In some preferred compositions, the polyester comprises a majority of the composition of the inventions, and in some embodiments the polyester is present in an amount of at least 80 wt. %, or at least 90 wt. %, based on the weight of the composition (excluding fillers, inorganic compounds or particles, fibers, impact modifiers, or other polymers serve as impact modifiers or which form a discontinuous phase such as may be found in cold storage food trays).

The polyester compositions can be prepared by polymerization procedures known in the art sufficient to effect esterification and polycondensation. Polyester melt phase manufacturing processes include direct condensation of a dicarboxylic acid with the diol, optionally in the presence of esterification catalysts, in the esterification zone, followed by polycondensation in the prepolymer and finishing zones in the presence of a polycondensation catalyst; or ester exchange usually in the presence of a transcsterification catalyst in the ester exchange zone, followed by prepolymerization and finishing in the presence of a polycondensation catalyst, and each may optionally be solid stated according to known methods.

Other base polymers may be used with the instant invention. One example is polypropylene.

Compositions of the present invention also comprise a non-polymeric oxidizable organic component. It is preferred that the non-polymeric oxidizable organic component of the present invention has a high degree of affinity for polyesters, the preferred base polymer. Preferably, the non-polymeric oxidizable organic compound is a polar organic compound such as an amide, an imide, an ester or an ether having oxidizable groups such as benzylic or allylic groups.

In certain embodiments of the present invention, the non-polymeric oxidizable organic component is a compound of formula (I) or (II): 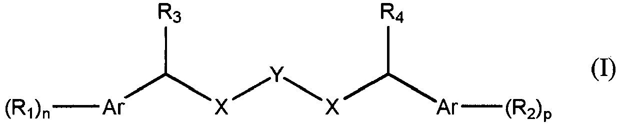 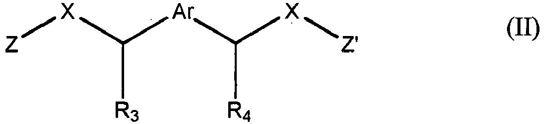 wherein,
Ar is aryl or heteroaryl;
X is 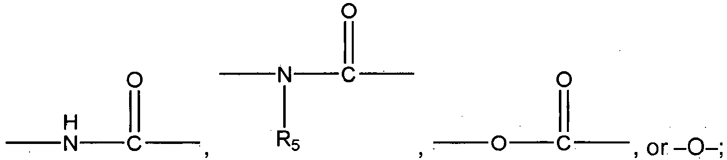 Y is alkylene, cycloalkylene, or arylene;
R₁ and R₂ are each independently H or alkyl;
R₃ and R₄ are each independently H, alky, cycloalkyl, aryl, or aralkyl;
R₅ is alkyl, cycloalkyl, or aryl;
Z and Z' are each independently H, alkyl, cycloalkyl, aryl, or aralkyl; and
n and p are each independently 0, 1, 2, 3, 4, or 5.

As used herein, the term "alkyl" refers to a substituted or unsubstituted aliphatic hydrocarbon chain. Alkyl groups have straight and branched chains. In some embodiments, alkyls have from 1 to 12 carbon atoms or 1 to 6 carbon atoms, unless explicitly specified otherwise. Alkyl groups include, bur are not limited to methyl, ethyl, propyl, isopropyl, butyl, 1-butyl and t-butyl. Specifically included within the definition of "alkyl" are those aliphatic hydrocarbon chains that are optionally substituted.

As used herein, the term "aryl" is defined herein as an aromatic carbocyclic moiety of up to 20 carbon atoms. In some embodiments, aryl groups have 6-20 carbon atoms or 6-14 carbon atoms. Aryls may be a single ring (monocyclic) or multiple rings (bicyclic, up to three rings) fused together or linked covalently. Any suitable ring position of the aryl moiety may be covalently linked to the defined chemical structure. Aryl groups include, but are not limited to, phenyl, 1-naphthyl, 2-naphthyl, dihydronaphthyl, tetrahydronaphthyl, biphenyl, anthryl, phenanthryl, fluorenyl, indanyl, biphenylenyl, acenaphthenyl, and acenaphthylenyl. In some embodiments, phenyl is a preferred aryl. Aryl groups may also be optionally substituted with one or more substituents.

As used herein, the term "heteroaryl" refers to an aromatic heterocyclic ring system, which may be a single ring (monocyclic) or multiple rings (bicyclic, up to three rings) fused together or linked covalently and having for example 5 to 20 ring members. The rings may contain from one to four hetero atoms selected from nitrogen (N), oxygen (O), or sulfur (S), wherein the nitrogen or sulfur atom(s) are optionally oxidized, or the nitrogen atom(s) are optionally substituted (e.g., by alkyl such as methyl) or quarternized. Any suitable ring position of the heteroaryl moiety may be covalently linked to the defined chemical structure. Exemplary heteroaryl groups include, but are not limited to, pyrryl, furyl, pyridyl, pyridine-N-oxide, 1,2,4-thiadiazolyl, pyrimidyl, thienyl, isothiazolyl, imidazolyl, tetrazolyl, pyrazinyl, pyrimidyl, quinolyl, isoquinolyl, thiophenyl, benzothienyl, isobenzofuryl, pyrazolyl, indolyl, purinyl, carbazolyl, benzimidazolyl, and isoxazolyl.

Optional substituents for alkyl, alkenyl, aryl, or heteroaryl groups are well known to those skilled in the art. These substituents include alkyl, alkoxy, aryloxy, hydroxy, acetyl, cyano, nitro, glyceryl, and carbohydrate, or two substituents taken together may be linked as an -alkylene- group to form a ring.

In some embodiments of the present invention, the compositions comprise at least one non-polymeric oxidizable organic compound of the formula (I)-(A) or (II)-(A), which are preferred species of formulas (I) and (II), respectively:
Dibenzyl Adipamide (DBA) 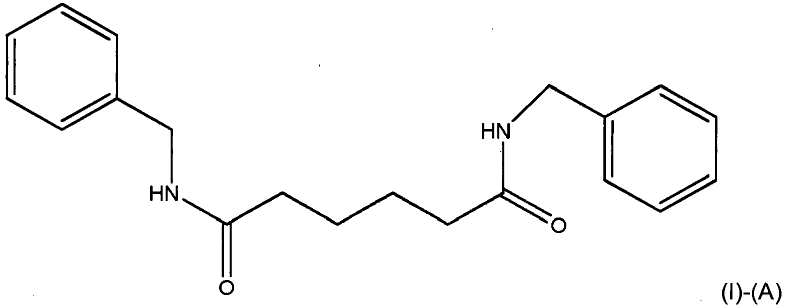 or
N,N'-[1,3-phenylenebis(methylene)]bis Acetamide

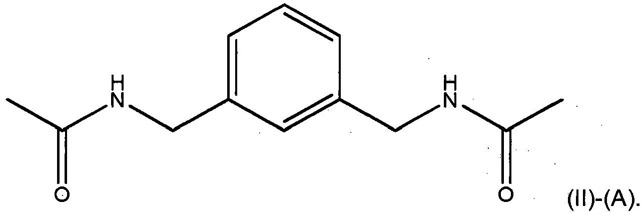

At least one of these non-polymeric oxidizable organic compounds described herein normally will be used in an amount of 0.1 to 10 weight percent in an article based on the weight of the composition. In some preferred embodiments, the non-polymeric oxidizable organic compound(s) will be present in an amount of 1 to 5 weight percent based on the weight of the composition. In other embodiments, the non-polymeric oxidizable organic compound(s) will be present in an amount of 1 to 3 weight percent based on the weight of the composition.

In master batch solutions the amount of non-polymeric oxidizable organic compound will typically be from 10 to 90 weight percent based on the weight of the composition. In some preferred embodiments, the amount of non-polymeric oxidizable organic compound will be from 20 to 80 weight percent based on the weight of the composition.

The compounds described herein, including non-polymeric oxidizable organic compounds (I)-(A) and (II)-(A), can be made by standard synthetic methods known to those skilled in the art. For example, one could derive non-polymeric oxidizable organic compound (I)-(A) by reacting adipic acid and benzyl amine. Non-polymeric oxidizable organic compound (II)-(A) could be made by reacting m-xylene diamine with a formic acid derivative.

In certain embodiments of the present invention, the non-polymeric oxidizable organic component is a compound of Formula III or IV: 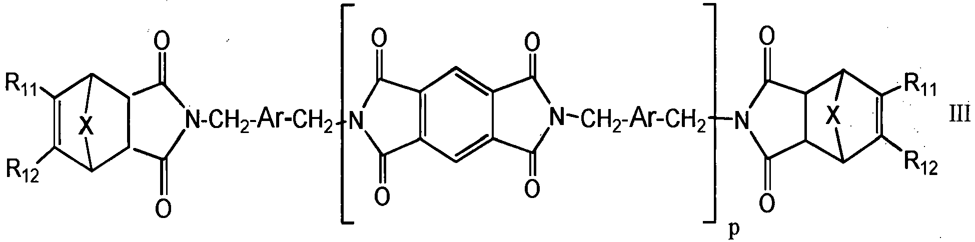 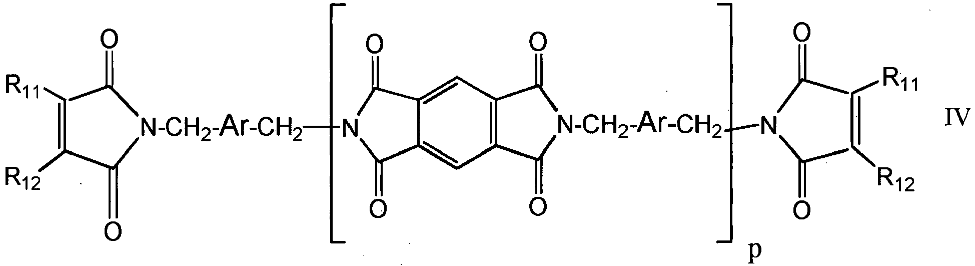 wherein Ar is an o-, m-, or p-phenylene moiety, a substituted phenylene moiety, or a naphthalene moiety; R₁₁ and R₁₂ are independently selected from the group consisting of: hydrogen, alkyl, alkenyl, and aryl; X is O or -(CH₂)ₙ-; n = 0, 1, or 2; and p = 0, 1, or 2.

In one aspect, the oxidizable organic component of the present invention is the compound m-xylylene-bis-(tetrahydrophthalimide) ("MXBT"):

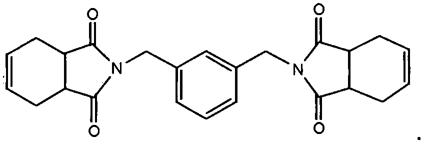

MXBT is an exemplary species of formula III wherein Ar is an m-phenylene moiety, R₁₁ is H, R₁₂ is H, and X is - (CH₂)ₙ-, where n is 0 and p is 0.

In yet another aspect, the oxidizable organic component of the present invention is the compound m-xylylene-bis-(methyltetrahydrophthalimide) ("MXBMT"):

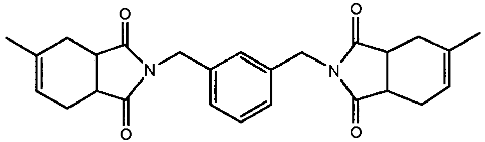

MXBMT is an exemplary species of formula III wherein Ar is an m-phenylene moiety, R₁₁ is methyl, R₁₂ is H, and X is -(CH₂)ₙ-, where n is 0 and p is 0.

In another aspect the oxidizable organic component of the present invention is the compound m-xylylene-bis-(octenyl succinimide) ("MXBO"):

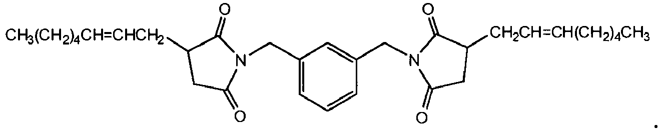

MXBO is an exemplary species of formula IV wherein Ar is an m-phenylene moiety, R₁₁ is an alkenyl group, R₁₂ is H, and p is 0.

In another aspect, the oxidizable organic component of the present invention is the compound m-xylylene-bis-citraconimide ("MXBC"):

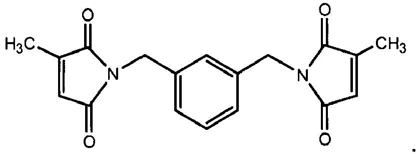

MXBC is an exemplary species of formula IV wherein Ar is an m-phenylene moiety, R₁₁ is an alkyl group, R₁₂ is H, and p is 0.

In yet another aspect, the oxidizable organic component of the present invention is the compound m-xylylene-bis(methylnadimide) ("MXBMN"):

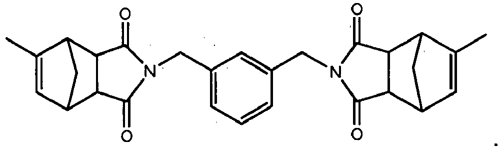

MXBMN is an exemplary species of formula III wherein Ar is an m-phenylene moiety, R₁₁ is methyl, R₁₂ is H, and X is -(CH₂)ₙ-, where n is 1 and p is 0.

In yet another aspect, the oxidizable organic component of the present invention is the compound m-xylylene-bis(nadimide) ("MXBN"):

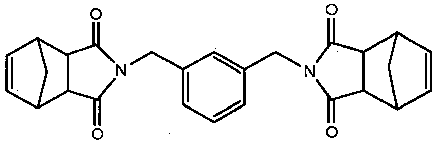

MXBN is an exemplary species of formula III wherein Ar is an m-phenylene moiety, R₁₁ and R₁₂ is H, and X is -(CH₂)ₙ-, where n is 1 and p is 0.

Syntheses of oxidizable organic components according to formulas III and IV are described fully in U.S. patent application Serial No. 61/332,054.

Thus, in summary, the non-polymeric oxidizable organic component is at least one selected from the group consisting of: formula (I), formula (II), formula (III), and formula (IV).

The transition metal used in the instant compositions is a metal in the positive oxidation state. It should be noted that it is contemplated that one or more such metals may be used. The transition metal functions to catalyze or promote the oxidation of the organic oxidizable component (i.e., the reaction of the organic oxidizable component with molecular oxygen).

The transition metal can be selected from the first, second, or third transition series of the Periodic Table. The metal can be Rh, Ru, or one of the elements in the series of Sc to Zn (i.e., Sc, Ti, V, Cr, Mn, Fe, Co, Ni, Cu, and Zn). In some embodiments, cobalt is added in +2 or +3 oxidation state. In some embodiments, it is preferred to use cobalt in the +2 oxidation state. In certain embodiments, copper in the +2 oxidation state is utilized. In some embodiments, rhodium in the +2 oxidation state is used. In certain embodiments, zinc may also be added to the composition. Preferred zinc compounds include those in a positive oxidation state.

Suitable counter-ions to the transition metal cations include carboxylates, such as neodecanoates, octanoates, acetates, lactates, naphthalates, malates, stearates, acetylacetonates, linoleates, oleates, palmitates, 2-ethylhexanoates, or ethylene glycolates; or as their oxides, borates, carbonates, chlorides, dioxides, hydroxides, nitrates, phosphates, sulfates, or silicates among others.

In some embodiments, levels of at least 10 ppm, or at least 50 ppm, or at least 100 ppm of metal can achieve suitable oxygen scavenging levels. The exact amount of transition metal used in an application can be determined by trials that are well within the skill level of one skilled in the art. In some embodiments involving wall applications (as opposed to master batch applications where more catalyst is used), it is preferred to keep the level of metal below 300 ppm and, in other embodiments, preferably below 250 ppm. In master batch compositions, the level of transition metal may range from 1000 to 10,000 ppm. In some preferred embodiments, the range is from 2000 to 5000 ppm.

The transition metal or metals may be added neat or in a carrier (such as a liquid or wax) to an extruder or other device for making the article, or the metal may be present in a concentrate or carrier with the oxidizable organic component, in a concentrate or carrier with a base polymer, or in a concentrate or carrier with a base polymer/oxidizable organic component blend. Alternatively, at least a portion of the transition metal may be added as a polymerization catalyst to the melt phase reaction for making the base polymer (a polyester polymer in some embodiments) and be present as residual metals when the polymer is fed to the melting zone (e.g. the extrusion or injection molding zone) for making the article such as a preform or sheet. It is desirable that the addition of the transition metal does not substantially increase the intrinsic viscosity (IV) of the melt in the melt processing zone. Thus, transition metal or metals may be added in two or more stages, such as once during the melt phase for the production of the polyester polymer and again once more to the melting zone for making the article.

The compositions of the present invention also comprise a hydrophillic activator compound selected from the group consisting of: (i) a polyester ionomer containing a sulfoisophthalate moiety, (ii) a polyol derivative, and (iii) a N-hydroxyimide. The activator compound according to the present invention functions to enable the composition to scavenge oxygen immediately after being formed into a container, thereby eliminating an induction period that otherwise would be required to initiate oxygen scavenging for such compositions.

Preferably, the activator compound is present in the oxygen scavenging compositions of the present invention at an amount of from 0.01 to 5 wt.%, more preferably from 0.1% to 2 wt.%.

The polyester ionomer containing a sulfoisophthalate moiety is preferably a copolyester containing a metal sulfonate salt group. The metal ion of the sulfonate salt may be Na+, Li+, K+, Zn++, Mn++, Ca++ and the like. The sulfonate salt group is preferably attached to an aromatic acid nucleus such as a benzene, naphthalene, diphenyl, oxydiphenyl, sulfonyldiphenyl, or methylenediphenyl nucleus.

Preferably, the aromatic acid nucleus is sulfophthalic acid, sulfoterephthalic acid, sulfoisophthalic acid, 4-sulfonaphthalene-2,7-dicarboxylic acid, and their esters. Most preferably, the sulfomonomer is 5-sodiumsulfoisophthalic acid or 5-zincsulfoisophthalic acid and most preferably their dialkyl esters such as the dimethyl ester and glycol ester.

In some embodiments of the present invention, the polyester ionomer containing a sulfoisophthalate moiety is provided as a blend with a polyester base polymer. Such blend can be prepared by adding together the polyester ionomer to the polyester and, optionally any other component, using a gravimetric feeder for the components, at the throat of an injection molding machine that produces a preform that can be stretch blow molded into the shape of the container. Alternatively the polyester resin can be polymerized with the polyester monomer and, optionally any other component, to form a copolymer. This copolymer can be mixed at the injection molding machine with other components of the composition of the present invention. Alternatively, all the blend components can be blended together, or as a blend of master batches, and fed as a single material to the extruder. The mixing section of the extruder should be of a design to produce a homogeneous blend.

Examples of polyesteriiomomer include a PET copolymer modified with 5-sulfoisophthalic acid sodium salt as comonomer (A) or an amorphous copolyester of diethylene glycol, isophthalic acid and sodium 5-sulfoisophthalate (B):

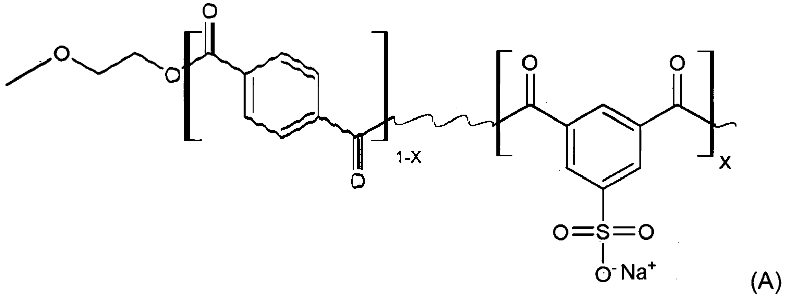

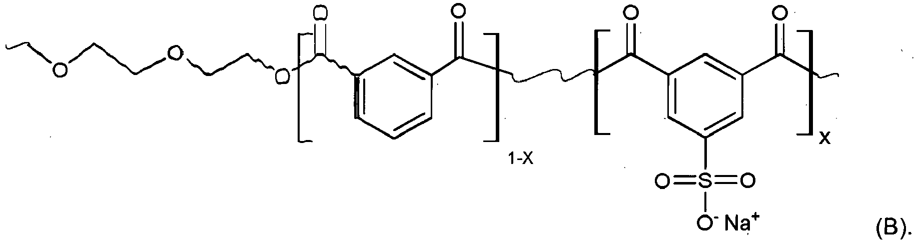

Commercially available polyester ionomer resins include Invista 2300K (INVISTA North America S.ar.l., Wilmington, DE) and Eastman AQ coplolyesters (Eastman Chemical Company, Kingsport, TN).

Suitable polyol derivatives include polyalkylene glycols such as, polyethylene glycol (PEG), polypropylene glycol, dialkyl-ether di-alkylesters, and polyalkylene-ether di-alkylesters, glyceryl triacetate, ester derivatives of benzyl alcohol, polyhydric alcohols, e.g., mannitol, sorbitol and xylitol; polyoxyethylenes; linear polyols, e.g., ethylene glycol, 1,6-hexanediol, neopentyl glycol and methoxypolyethylene glycol; and mixtures thereof. Preferably, the polyol derivatives for use according to the present invention have a molecular weight of less than 10,000 MW.

Particularly useful as a activator compounds according to the present invention are dialkyl-ether di-alkylesters and polyalkylene-ether di-alkylesters such as di- or poly-ethylene glycol di-alkylesters. Dialkyl-ether diesters include C₄- to C₁₂-esters of C₁- to C₄-ether- or polyether-dicarboxylic acids. Examples also include esters such as caprate, caprylate, hexanoate, heptanoate, pelargonate, 2-ethylhexoate, and the like. Di-alkylesters of ethers may include ethylene glycol, propylene glycol, triethylene glycol, tetraethylene glycol, and polyethylene glycols having a molecular weight of up to 800. A preferred activator is polyethylene glycol di-2-ethylhexoate of molecular weight from 300 to 700. An more preferred plasticizer is PEG 400 di-2-ethylhexoate, having a molecular weight of 662 and sold under the trademark TegMeR® 809 (The HallStar Company, Chicago, IL). PEG 400 refers to a polyethylene glycol of molecular weight of 400, or PEG with an average number of ethylene oxide units of 8 or 9. Other preferred PEGs are commercially-available from Dow Chemical (Danbury, Conn.) under the CARBOWAX SENTRY line of products.

Dialkyl-ether di-alkylesters and polyalkylene-ether di-alkylesters, such as di- or poly-ethylene glycol di-alkylesters, are suitable for use as activator compounds of the present invention. Dialkyl-ether diesters include C₄- to C₁₂-esters of C₁- to C₄-ether- or polyether-dicarboxylic acids. Examples of also include esters such as caprate, caprylate, hexanoate, heptanoate, pelargonate, 2-ethylhexoate, and the like. Di-alkylesters of ethers may include ethylene glycol, propylene glycol, triethylene glycol, tetraethylene glycol, and polyethylene glycols having a molecular weight of up to 800. A preferred activator is polyethylene glycol di-2-ethylhexoate of molecular weight from 300 to 700. An more preferred plasticizer is PEG 400 di-2-ethylhexoate, having a molecular weight of 662 and sold under the trademark TegMeR® 809 (The HallStar Company, Chicago, IL). PEG 400 refers to a polyethylene glycol of molecular weight of 400, or PEG with an average number of ethylene oxide units of 8 or 9.

Suitable N-hydroxyimides include those of the general formula (V): 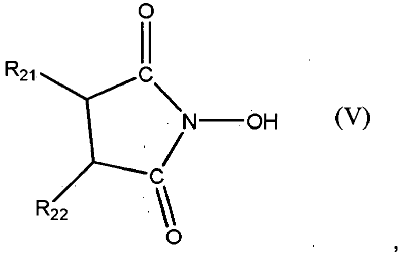 wherein R₂₁ and R₂₂ each independently may be a hydrogen atom or an organic group. R₂₁ and R₂₂ may form a ring together with the carbon atoms to which they are bonded. R₂₁ and/or R₂₂ may form a carbon-carbon double bond with the carbon atoms to which they are bonded.

For example, R₂₁ and R₂₂ each independently a hydrogen atom, a halogen atom, an acyl group, an alkyl group, an aryl group, an aralkyl group, a heteroaryl group, a hydroxyl group, a hydroxyl group protected by a protecting group, a mercapto group protected by a protecting group, a carboxyl group, metal salt of a carboxyl group, a carboxyl group protected by a protecting group, an aldehyde group protected by a protecting group, an amino group protected by a protecting group, a dialkylamino group, an amide group, a sulfonic group, metal salt of a sulfonic group, a sulfonic ester group, a group expressed by a formula of -OP(=O)(OH)₂, metal salt or an ester derivative of a group expressed by a formula of -OP(=O)(OH)₂, a group expressed by a formula of -P(=O)(OH)₂, or metal salt or an ester derivative of a group expressed by a formula of -P(=O)(OH)₂.

Typical examples of the N-hydroxyimide compound represented by Formula (V) include N-hydroxysuccinimide, N-hydroxymaleimide, N,N'-dihydroxycyclohexanetetracarboxylic diimide, N-hydroxyphthalimide, N-hydroxytetrachlorophthalimide, N-hydroxytetrabromophthalimide, N-hydroxyhexahydrophthalimide, 3-sulfonyl-N-hydroxyphthalimide, 3-methoxycarbonyl-N-hydroxyphthalimide, 3-methyl-N-hydroxyphthalimide, 3-hydroxy-N-hydroxyphthalimide, 4-nitro-N-hydroxyphthalimide, 4-chloro-N-hydroxyphthalimide, 4-methoxy-N-hydroxyphthalimide, 4-dimethylamino-N-hydroxyphthalimide, 4-carboxy-N-hydroxyhexahydrophthalimide, 4-methyl-N-hydroxyhexahydrophthalimide, N-hydroxy het acid imide, N-hydroxy hymic imide, N-hydroxytrimellitic imide, N,N-dihydroxy pyromellitic diimide, and mixtures thereof. Among them, N-hydroxysuccinimide, N-hydroxymaleimide, N-hydroxyhexahydrophthalimide, N,N'-dihydroxycyclohexanetetracarboxylic diimide, N-hydroxyphthalimide, N-hydroxytetrachlorophthalimide, and N-hydroxytetrabromophthalimide are particularly preferable. N-hydroxyphthalimide is the most preferred.

Without intending to be bound by a particular theory, it is believed that the hydrophilic nature of the activators attract available moisture and, as the moisture travels through the wall of a container, the scavenger and transition metal catalyst become hydrated to become more mobile to activate oxygen scavenging reaction.

Again, without intending to be bound by a particular theory, It is also believed that activator compounds such as, for example, N-hydroxyimides readily generate free radicals by reacting with the initial oxygen scavenger adduct (i.e., a peroxo radical) to regenerate the scavenger radicals via reaction with the scavenger so they can continue to react with more oxygen to form the hydroperoxide product. Preferably. the oxidation cycle continues until the scavenger is consumed.

The amounts of the components used in the oxygen scavenging formulations of the present invention can affect the use and effectiveness of this composition. Thus, the amounts of base polymer, transition metal catalyst, activator, etc., can vary depending on the desired article and its end use. For example, the primary function of the organic oxidizable components detailed above is to react irreversibly with oxygen during the scavenging process, while a primary function of the transition metal catalyst is to facilitate this process. Thus, to a large extent, the amount of the organic oxidizable component present affects the oxygen scavenging capacity of the composition, i.e., the amount of oxygen that the composition can consume, while the amount of transition metal catalyst affects the rate at which oxygen is consumed as well as the induction period.

The oxygen scavenger composition of the present invention can be incorporated in packaging articles having various forms. Suitable articles include, but are not limited to, flexible sheet films, flexible bags, pouches, semi-rigid and rigid containers such as bottles (e.g., PET bottles) or metal cans, or combinations thereof.

Typical flexible films and bags include those used to package various food items and may be made up of one or a multiplicity of layers to form the overall film or bag-like packaging material. The oxygen scavenger composition of the present invention can be used in one, some or all of the layers of such packaging material.

Typical rigid or semi-rigid articles include plastic, paper or cardboard containers, such as those utilized for juices, soft drinks, as well as thermoformed trays or cup normally having thickness in the range of from 100 to 1000 micrometers. The walls of such articles can comprise single or multiple layers of materials. The articles can also take the form of a bottle or metal can, or a crown, cap, crown or cap liner, plastisol or gasket. The oxygen scavenger composition of the present invention can be used as an integral layer or portion of, or as an external or internal coating or liner of, the formed semi-rigid or rigid packaging article. As a liner, the oxygen scavenger composition can be extruded as a film along with the rigid article itself, in, e.g., a coextrusion, extrusion coating, or extrusion lamination process, so as to form the liner *in situ* during article production; or alternatively can be adhered by heat and/or pressure, by adhesive, or by any other suitable method to an outer surface of the article after the article has been produced.

In one preferred embodiment of the present invention, the composition of the present invention, i.e., a base polymer, a transition metal in a positive oxygen state, at least one non-polymeric oxidizable organic component as described above, and at least one activator compound as described above can be employed to form a monolayer bottle. In another preferred embodiment of the present invention, the composition of the present invention can form one layer of a multilayer bottle wherein the layer comprising the composition of the present invention comprises from at least 1% and typically 2 to 6% of a compound having the structure of formula I or II.

Besides articles applicable for packaging food and beverage, articles for packaging other oxygen-sensitive products can also benefit from the present invention. Such products would include pharmaceuticals, oxygen sensitive medical products, corrodible metals or products, electronic devices and the like.

The composition may also include other components such as pigments, fillers, crystallization aids, impact modifiers, surface lubricants, denesting agents, stabilizers, ultraviolet light absorbing agents, metal deactivators, nucleating agents such as polyethylene and polypropylene, phosphite stabilizers and dyestuffs. Other additional components are well known to those skilled in the art and can be added to the existing composition so long as they do not negatively impact the performance of the compositions. Typically, the total quantity of such components will be less than 10% by weight relative to the whole composition. In some embodiments, the amount of these optional components is less than 5%, by weight relative to the total composition.

A common additive used in the manufacture of polyester polymer compositions used to make stretch blow molded bottles is a reheat additive because the preforms made from the composition must be reheated prior to entering the mold for stretch blowing into a bottle. Any of the conventional reheat additives can be used, such additives include various forms of black particles, e.g. carbon black, activated carbon, black iron oxide, glassy carbon, and silicon carbide; the gray particles such as antimony, and other reheat additives such as silicas, red iron oxide, and so forth.

In many applications, not only are the packaging contents sensitive to the ingress of oxygen, but the contents may also be affected by UV light. Fruit juices and pharmaceuticals are two examples of such contents. Accordingly, in some embodiments, it is desirable to incorporate into the polyester composition any one of the known UV absorbing compounds in amounts effective to protect the packaged contents.

The instant compositions can be made by mixing a base polymer (PET, for example) with the oxidizable organic component and the transition metal composition. Such compositions can be made by any method known to those skilled in the art. In certain embodiments, some or part of the transition metal may exist in the base polymer prior to mixing. This residual metal, for example, can exist from the manufacturing process of the base polymer. In some embodiments, the base polymer, the oxidizable organic component and the transition metal are mixed by tumbling in a hopper. Other optional ingredients can be added during this mixing process or added to the mixture after the aforementioned mixing or to an individual component prior to the aforementioned mixing step.

The instant composition can also be made by adding each ingredient separately and mixing the ingredients prior melt processing the composition to form an article. In some embodiments, the mixing can be just prior to the melt process zone. In other embodiments, one or more ingredients can be premixed in a separate step prior to bringing all of the ingredients together.

In some embodiments, the invention concerns use of the compositions described herein as a component of a wall that is used in a package for oxygen sensitive materials. The necessary scavenging capacity of a package will generally have to be greater for walls that have a greater permeance in the absence of scavenging additives. Accordingly, a good effect is harder to achieve with inherently higher permeance materials are used.

The wall may be a rigid one, a flexible sheet, or a clinging film. It may be homogenous or a laminate or coated with other polymers. If it is laminated or coated, then the scavenging property may reside in a layer of the wall the permeance of which is relatively high in the absence of scavenging and which alone would not perform very satisfactorily but which performs satisfactorily in combination with one or more other layers which have a relatively low permeance but negligible or insufficient oxygen-scavenging properties. A single such layer could be used on the outside of the package since this is the side from which oxygen primarily comes when the package is filled and sealed. However, such a layer to either side of the scavenging layer would reduce consumption of scavenging capacity prior to filling and sealing.

When the instant compositions are used in a wall or as a layer of a wall, the permeability of the composition for oxygen is advantageously not more than 3.0, or 1.7, or 0.7, or 0.2, or 0.03 cm³ mm/(m² atm day). The permeability of the composition provided by the present invention is advantageously not more than three-quarters of that in the absence of oxygen-scavenging properties. In some embodiments, the permeability is not more than one half, one-tenth in certain embodiments, one twenty-fifth in other embodiments, and not more than one-hundredth in yet other embodiments of that in the absence of oxygen-scavenging properties. The permeability in the absence of oxygen-scavenging properties is advantageously not more than 17 cm³ mm/(m² atm day), or 10, and or 6. A particularly good effect can be achieved for such permeabilities in the range from 0.5, or 1.0, to 10, or 6.0, cm³ mm/(m² atm day). Measuring oxygen permeation can be performed by one of ordinary skilled in the art employing oxygen permeation (OTR) instrumentation such as, for example, OX-TRAN® instruments available from MOCON, Inc. (Minneapolis, MN).

In another aspect, the instant composition can be used as a master batch for blending with a polymer or a polymer containing component. In such compositions, the concentration of the oxidizable organic component and the transition metal will be higher to allow for the final blended product to have suitable amounts of these components. The master batch may also contain an amount of the polymer to which the master batch is to be blended with. In other embodiments, the master batch may contain a polymer that is compatible with the polymer to which the master batch is to be blended.

In yet another aspect, the compositions of the instant invention can be used for forming a layer of a wall which primarily provides oxygen-scavenging (another layer including polymer providing gas barrier without significant scavenging), or as a head-space scavenger (completely enclosed, together with the package contents, by a package wall). Such techniques are well know to those skilled in the art.

The time period for which the permeability is maintained can be extended by storing the articles in sealed containers or under an inert atmosphere such as nitrogen prior to use with oxygen sensitive materials.

In another aspect, the invention provides a package, whether rigid, semi-rigid, collapsible, lidded, or flexible or a combination of these, comprising a wall as formed from the compositions described herein. Such packages can be formed by methods well known to those skilled in the art.

Among the techniques that may be used to make articles are moulding generally, injection moulding, stretch blow moulding, extrusion, thermoforming, extrusion blow moulding, and (specifically for multilayer structures) co-extrusion and lamination using adhesive tie layers. Orientation, e.g., by stretch blow moulding, of the polymer is especially attractive with phthalate polyesters because of the known mechanical advantages that result.

The melt processing zone for making the article can be operated under customary conditions effective for making the intended articles, such as preforms, bottles, trays, and other articles mentioned below. In one embodiment, such conditions are effective to process the melt without substantially increasing the IV of the melt and which are ineffective to promote transesterification reactions. In some preferred embodiments, suitable operating conditions effective to establish a physical blend of the polyester polymer, oxidizable organic component, and transition metal are temperatures in the melt processing zone within a range of 250°C to 300°C at a total cycle time of less than 6 minutes, and typically without the application of vacuum and under a positive pressure ranging from 0 Pa (0 psig) to 6.3 MPa (900 psig). In some embodiments, the residence time of the melt on the screw can range from 1 to 4 minutes.

Specific articles include preforms, containers and films for packaging of food, beverages, cosmetics, pharmaceuticals, and personal care products where a high oxygen barrier is needed. Examples of beverage containers are bottles for holding water and carbonated soft drinks, and the invention is particularly useful in bottle applications containing juices, sport drinks, beer or any other beverage where oxygen detrimentally affects the flavor, fragrance, performance (prevent vitamin degradation), or color of the drink. The compositions of the instant invention are also particularly useful as a sheet for thermoforming into rigid packages and films for flexible structures. Rigid packages include food trays and lids. Examples of food tray applications include dual ovenable food trays, or cold storage food trays, both in the base container and in the lidding (whether a thermoformed lid or a film), where the freshness of the food contents can decay with the ingress of oxygen. The compositions of the instant invention also find use in the manufacture of cosmetic containers and containers for pharmaceuticals or medical devices.

The package walls of the instant invention can be a single layer or a multilayer constructions. In some embodiments using multilayer walls, the outer and inner layers may be structural layers with one or more protective layers containing the oxygen scavenging material positioned there between. In some embodiments, the outer and inner layers comprise and polyolefin or a polyester. In certain embodiments, a single layer design is preferred. Such a layer may have advantages in simplicity of manufacture and cost.

In this specification and in the claims that follow, reference will be made to a number of terms, which shall be defined to have the following meanings:

As used herein, the phrase "having the formula" or "having the structure" is not intended to be limiting and is used in the same way that the term "comprising" is commonly used. The term "independently selected from" is used herein to indicate that the recited elements, e.g., R groups or the like, can be identical or different.

As used herein, the terms "a", "an", "the" and the like refer to both the singular and plural unless the context clearly indicates otherwise. "A bottle", for example, refers to a single bottle or more than one bottle.

Also as used herein, the description of one or more method steps does not preclude the presence of additional method steps before or after the combined recited steps. Additional steps may also be intervening steps to those described. In addition, it is understood that the lettering of process steps or ingredients is a convenient means for identifying discrete activities or ingredients and the recited lettering can be arranged in any sequence.

Where a range of numbers is presented in the application, it is understood that the range includes all integers and fractions thereof between the stated range limits. A range of numbers expressly includes numbers less than the stated endpoints and those in-between the stated range. A range of from 1-3, for example, includes the integers one, two, and three as well as any fractions that reside between these integers.

As used herein, "master batch" refers to a mixture of base polymer, oxidizable organic component, and transition metal that will be diluted, typically with at least additional base polymer, prior to forming an article. As such, the concentrations of oxidizable organic component and transition metal are higher than in the formed article.

The following examples are included to demonstrate preferred embodiments of the invention regarding synthesis of the molecules and use of the molecules to scavenge oxygen as well products containing such scavengers. It should be appreciated by those of skill in the art that the techniques disclosed in the examples which follow represent techniques discovered by the inventors to function well in the practice of the invention, and thus can be considered to constitute preferred modes for its practice. However, those of skill in the art should, in light of the present disclosure, appreciate that many changes can be made in the specific embodiments which are disclosed and still obtain a like or similar result without departing from the spirit and scope of the invention.

### EXAMPLES

Example 1 : 94.9 parts by weight of dry, bottle grade (0.82 I.V.) PET pellets (Heatwave™ CF746, Eastman Chemical Co., USA), were tumble blended with 4 parts of dibenzyl adipamide (abbreviated as "DBA") ( obtained from Wilshire Technologies, Princeton,N.J., USA), 1 part of a polyester ionomer - Eastman AQ™55S grade polymer (Eastman Chemical Co, Kingsport,TN) and 1000 ppm of cobalt neodecanoate powder. The blended mixture was directly injection molded into rectangular plaques on an Arburg Model 320-210-500 injection molding machine at a melt temperature of 265°C and a mold temperature of 10°C and a cycle time of 40sec. The rectangular plaques were 15.9 cm long by 4.4cm wide, having five equal sections with increasing stepped thicknesses of 2 mm, 1.8 mm, 2.5 mm, 3.3 mm and 4 mm.

Comparative Example 1: The procedure from above example was repeated with the exclusion of AQ55S polyester iononomer (no activator) i.e., 95.9 parts of dry PET pellets (Heatwave™ CF746) were tumble blended with 4 parts of DBA and 1000 ppm cobalt neodecanoate and then injection molded into rectangular plaques as already described in Example 1.

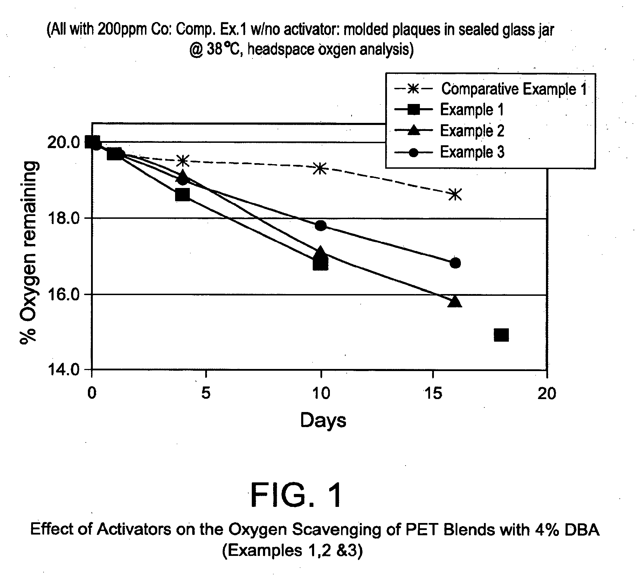

Plaque Oxygen Scavenging Testing: The plaques from both Example 1 and Comparative Example 1 were tested for oxygen scavenging by placing them (typically 7 plaques in each case) in a 700 ml wide mouth glass jar containing 5g water. The jar was tightly sealed with a canning jar lid having a rubber septum and then placed in a 38°C chamber. The oxygen content in the jar was measured periodically by inserting a syringe needle through the septum, withdrawing the air sample and analyzing on a Mocon headspace oxygen analyzer (Mocon Model LC700F, MOCON Modern Controls, Minneapolis, Minn.). After an initial oxygen content measurement the subsequent measurements monitor the decrease in oxygen content due to the oxygen scavenging over a period of several days. The data from Example 1 and Comparative Example 1 is shown in FIG. 1. It may be noted that Example 1 containing polyester ionomer AQ55S as activator showed a significantly faster oxygen scavenging rate compared to the compatrative example which did not have this activator additive.

Example 2: 94.9 parts by weight of dry, PET pellets (Heatwave™ CF746) were tumble blended with 4 parts of dibenzyl adipamide, 1 part of a polyether diester namely, PEG400 di-2-ethyl hexanoate (TegMeR^{®} 809 from Hallstar Co., Chicago,IL, USA) and 1000 ppm of cobalt neodecanoate powder. The blended mixture was directly injection molded into rectangular plaques and the plaques were tested for oxygen scavenging as described in Example 1 and Comparative Example 1. The oxygen scavenging data as shown in FIG. 1, indicates substantial increase in the rate (i.e., activation) of the oxygen scavenging compared to the comparative example 1 which did not contain the polyether diester as an activator.

Example 3: 94.9 parts by weight of dry, PET pellets (Heatwave™ CF746) were tumble blended with 4 parts of dibenzyl adipamide, 0.3. parts of N-Hydroxyphthalimide ("NHPI") (from Sigma-Aldrich, Milwaukee, WI, USA) and 1000 ppm of cobalt neodecanoate powder. The blended mixture was directly injection molded into rectangular plaques and the plaques were tested for oxygen scavenging as described in Example 1 and Comparative Example 1. The oxygen scavenging data as shown in FIG. 1, indicates substantial increase or activation of the oxygen scavenging compared to the Comparative Example 1 with no NHPI as an activator.

Example 4: 97 parts by weight of a modified PET resin containing sodium 5-sulfoisophthalate moieties (ca. 0.2 mol. %) and ca. 75 ppm of Cobalt (2300K polymer from Invista, USA) was thoroughly dried and tumble blended with 3 parts by weight of dibenzyladipamide (DBA). This modified PET- DBA blend was directly injection molded on a a 2003 Battenfeld A800/200H/125HC injection molding machine at 240-260°C into a single cavity 30g 33mm finish ketchup bottle preform mold cooled with circulating chilled water, to make the monolayer preforms.

In a 2^{nd} step, the above preforms were reheat-stretch-blowmolded into monolayer bottles. In the present example, the bottles were stretch blown on a Sidel SBO-1 machine running at ca. 800 bottles per hour. In the process, the preforms were typically heated to a surface temperature of 99°C prior to the blowing operation. The blow mold temperature was 12°C. The blow pressures were 3.3 MPa (33 bar). The bottles obtained were clear.

Comparative Example 2: 97 parts by weight of a standard bottle grade PET resin (Heatwave™ CF746) was thoroughly tumble blended with 3 parts by weight of dibenzyladipamide (DBA) and 2500ppm of cobalt neodecanoate powder. The intimately mixed blend was directly injection molded on the same Battenfeld injection molding machine and process conditions as described above in Example 4, into the same preform mold to make the 30g/33mm finish ketchup bottle monolayer preforms.

In a 2^{nd} step, the above preforms were reheat-stretch-blowmolded into monolayer bottles on the same Sidel SBO-1 machine using similar blow molding conditions as described above in Example 4. These monolayer bottles obtained were also clear.

'PET control' monolayer preforms and bottles were made from 100% PET (Heatwave™ CF746) under the same preform molding conditions and reheat stretch blow mold conditions as described before.

Bottle Oxygen Scavenging Testing (Orbisphere Tests): The bottles from Example 4, Comparative Example 2 and PET control were tested for oxygen scavenging performance using standard orbisphere testing equipment (Orbisphere, Geneva, Switzerland). Typically each bottle is loaded on an orbisphere bench top filler and after an initial flushing with nitrogen, it is filled with deoxygenated water (O₂ content <100ppb) and sealed with foil seal. After several bottles of each composition have been filled and sealed, they are stored under ambient conditions for a required shelf-life test period while the oxygen content or ingress in the bottles is monitored by periodically removing at least 3 bottles at a time to measure the oxygen content by using the orbisphere model 29972 sample device connected to Orbisphere model 3600 analyzer. For each measurement, the bottle seal is punctured and the liquid is forced out of the bottle with 138 kPa (20 psi) nitrogen and through the orbisphere sensor analyzer. After 30-50% liquid has been removed the measurement is stable the reading of oxygen content is recorded. An average of 3 to 5 readings is taken for each of the periodic measurement.

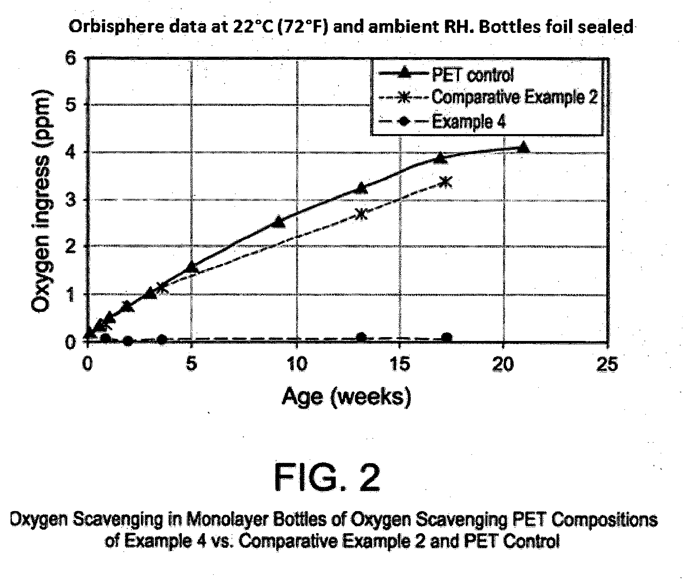

The orbisphere data shown in FIG. 2, clearly indicates the significantly superior oxygen scavenging performance for the bottles made from the inventive compositions of Example 4 exhibiting with no induction period and negligible oxygen ingress (<0.016 ppm) even after 17 weeks of storage. Apparently the sulfoisophthalate ionomer moiety in the PET is functioning as an activator for the oxygen scavenging by the 3% DBA and 80 ppm Co contained therein. In contrast, the Comparative Example 2 which contained the same 3%DBA in a standard PET with no activator moiety showed poor oxygen scavenging property even with 2500 ppm cobalt neodecanoate added as catalyst added. Consequently these bottles showed a significant oxygen ingress (>3.4 ppm in 17 weeks). The PET control bottle which does not have any oxygen scavenging property, understandably showed a significant oxygen ingress (> 3.8 ppm in 17 weeks, >4ppm in 21 weeks), through a steady oxygen permeation.

Example 5 : In this experiment, the inventive compositions were used as the barrier layer in a 3-layer coinjection molded bottle preform. The 3-layer preforms were made by a sequential co-injection molding process consisting of 2 separate extruder feeds. In the PET feed extruder (extruder "A" heated to 260-270°C), a commercial bottle grade PET (Heatwave™CF746) dried to low moisture content <10ppm was used. In the barrier resin feed extruder (extruder "B" heated to 240-260°C), a sulfoisophthalate modified PET (2300K polymer from Invista, USA) which was tumble blended with 6% dibenzyladipamide (DBA) and 2500 ppm cobalt neodecanoate was fed into the extruder. The two melt feeds from the A & B extruders were sequentially coinjection molded, using a 2003 Battenfeld A800/200H/125HC co-injection molding machine into a single cavity 30g 33mm finish ketchup bottle preform to form a 3- layer preform with the middle layer of the barrier PET blend material comprising ca. 40% of the total preform weight. The cycle time for molding was 30 sec.

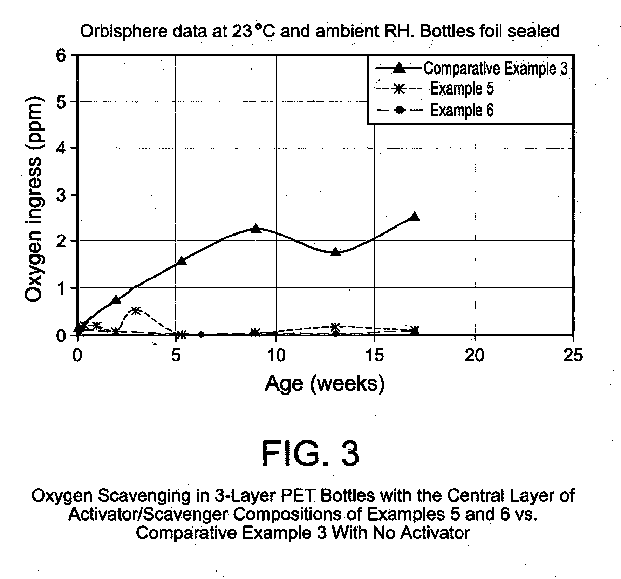

In a 2^{nd} step, the above 3-layer preforms were reheat-stretch-blowmolded into 3-layer bottles. In the present example, the bottles were stretch blown on a Sidel SBO-1 machine running at ca. 800 bottles per hour. In the process, the preforms were typically heated to a surface temperature of 99°C prior to the blowing operation. The blow mold temperature was 12°C. The blow pressures were 3.3 MPa (33 bar). The 3-layer bottles so obtained were quite clear. These bottles were tested for oxygen scavenging performance using the same Orbisphere test protocol as described before in Example 4. The data shown in FIG. 3 clearly indicates the excellent oxygen scavenging properties (<0.085 ppm O₂ in 17 weeks) for these bottles in contrast with the 3-layer bottles of Comparative Example 3 which showed poor oxygen scavenging properties (>2.5 ppm oxygen ingress in 17 weeks).

Comparative Example 3: In this experiment, the 3-layer bottles were made similar to those in Example 5, except using the standard PET(Heatwave™CF746). In the barrier resin feed extruder (extruder "B" heated to 240-260°C), a blend of 94 w% of a standard bottle grade PET (Heatwave™CF746) admixed with 6% dibenzyladipamide (DBA) and 2500 ppm cobalt neodecanoate was fed into the extruder. In the extruder 'A' (heated to 240-260°C), the feed consisted of 100% standard PET(Heatwave™CF746). The two melt feeds from the A & B extruders were sequentially coinjection molded into a single cavity 30g 33mm finish ketchup bottle preform to form a 3- layer preform with the middle layer of the PET blend material comprising ca. 40% of the total preform weight.

The above 3-layer preforms were reheat-stretch-blowmolded into 3-layer bottles as described before. These bottles were tested for oxygen scavenging performance using the same Orbisphere test protocol as described before. The data, as shown in FIG. 3, clearly indicates poor oxygen scavenging properties for these bottles (>2.5 ppm oxygen ingress) in comparison with the bottles from Example 5.

Example 6: In this experiment, the 3-layer preforms were made by the same sequential co-injection molding process as described above. In the extruder "A", 100% PET (Heatwave™CF746) was used. In the barrier resin feed extruder (extruder "B"), a dry blend of 93w% PET (2300K polymer from Invista, USA), 6w% dibenzyladipamide (DBA), 2500 ppm cobalt neodecanoate and 1w% polyethyleneglycol (Carbowax Sentry PEG8000 from Dow Chemical, USA) was fed into the extruder. The two melt feeds from the A & B extruders were sequentially coinjection molded into a single cavity 30g 33mm finish ketchup bottle preform to form a 3- layer preform with the middle layer of the barrier PET blend material comprising ca. 40% of the total preform weight.

The above 3-layer preforms were then reheat-stretch-blowmolded into 3-layer bottles and tested as before for oxygen scavenging performance using the Orbisphere test protocol. The data shown in FIG. 3 clearly indicates the excellent oxygen scavenging properties (<0.085 ppm O₂ in 17 weeks) for these bottles in contrast with the 3-layer bottles of Comparative Example 3 ( >2.5ppm 02 in 17 weeks).

Example 7: In this experiment, the 3-layer bottles were made with the activated oxygen scavenging compositions in the inner & outer skin layers (A-layers). The 3-layer preforms were made by the same sequential co-injection molding process as described before. In the extruder "A", a dry blend of 96 w% PET resin (2300K polymer from Invista, USA), 4 w% dibenzyladipamide (DBA) was fed, while in the extruder 'B' (the mid-layer feed), 100% PET pellets (Parastar™9000, Eastman Chemical Co., USA) was used. The two melt feeds from the A & B extruders were sequentially coinjection molded into a single cavity 30g ketchup bottle preform to form a 3- layer preform with the barrier PET blend material comprising ca. 30% in each of the 2 skin layers (A-layer) while the middle layer consisting of pure PET, ca. 40% the total preform weight.

The above 3-layer preforms were reheat-stretch-blowmolded into 3-layer bottles as before and tested for oxygen scavenging performance using the same Orbisphere test as described before. The orbisphere data clearly indicated the outstanding oxygen scavenging properties for these bottles (<8 ppb O₂ in 35 days) in comparison with the bottles from the Comparative Example 4 (1425 ppb O₂ in 35 days) or a control monolayer bottle made from 2300K polymer (1250 ppb O₂ in 35 days).

Comparative Example 4: In this experiment, the 3-layer bottles were made similar to those in Example 7 , except using a blend of 96 w% of a standard bottle grade PET (Parastar™9000) admixed with 4 w% dibenzyladipamide (DBA) and 1500 ppm cobalt neodecanoate was fed into the 'A' extruder. In the 'B' extruder, 100% PET pellets (Parastar™9000) was fed. The two melt feeds from the A & B extruders were sequentially coinjection molded into a single cavity 30g 33mm finish ketchup bottle preform to form a 3-layer preform with the PET blend material comprising ca. 30% in each of the 2 skin layers (A-layers) while the middle layer consisted of pure PET, ca. 40% the total preform weight.

The above 3-layer preforms were reheat-stretch-blowmolded into 3-layer bottles as described before. These bottles were tested for oxygen scavenging performance using the same Orbisphere test protocol as described before. The orbisphere data indicated poor oxygen scavenging properties for these bottles (>1400 ppb oxygen ingress in 35 days) in comparison with the bottles from Example 6 (< 8ppb O₂ in 35 days).

The PET control (2300K polymer) monolayer bottle was made from monolayer performs using a single extruder feed as described before. These bottles showed no oxygen scavenging (>1200 ppb O₂ in 35 days) similar to conventional monolayer PET bottles.

### Example 8: Synthesis and oxygen scavenging evaluation of MXBMT

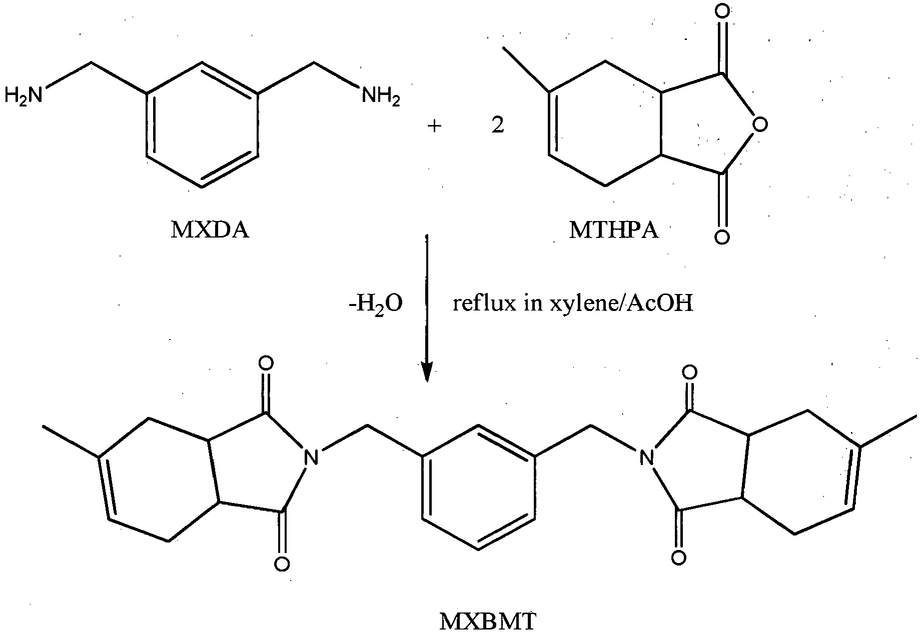

A mixture of xylene (1.5 L) and glacial acetic acid (1.5 L) was charged into a 5 L reaction vessel equipped with a Dean-Stark Trap/ reflux condenser assembly and a mechanical stirrer (a Dean Stark Trap is an efficient laboratory device used to continuously remove the water that is produced during a reaction as a by-product and drive the reaction to completion). Into the above 5 L reactor containing the solvent mixture, was added gradually with stirring, 518.5 grams (3.12 moles) of methyl tetrahydrophthalic anhydride (available under the trade name ECA1000 from Dixie Chemical Company Inc., Houston, TX, U.S.A.). The reaction mixture was gradually heated to 100-120°C while stirring. To the resulting warm solution was then added 215.4 grams (1.56 moles) of m-xylylene diamine (from Sigma-Aldrich) gradually at such a rate that the refluxing remained under control. During the addition, a reaction begins to take place and the water formed as a by-product begins to collect and separate as a dense layer from the xylene/ acetic acid mixture condensed in the Dean Stark Trap.

During the addition of m-xylylylene diamine, which was carried out over a period of 30 minutes, the reaction mixture remained clear at this temperature with no visible suspensions formed. The refluxing of the reaction mixture was continued for an additional period of 4 hours. During this period the water, formed as the by-product of the reaction, was continuously collected as a lower layer in the Dean-Stark apparatus and it was drained off periodically as much as needed. The completion of reaction was monitored by testing a small sample of the reaction mixture with thin layer chromatography (TLC). At the end of 4 hour refluxing period, the TLC analysis of the crude reaction mixture showed that the reaction was essentially complete.

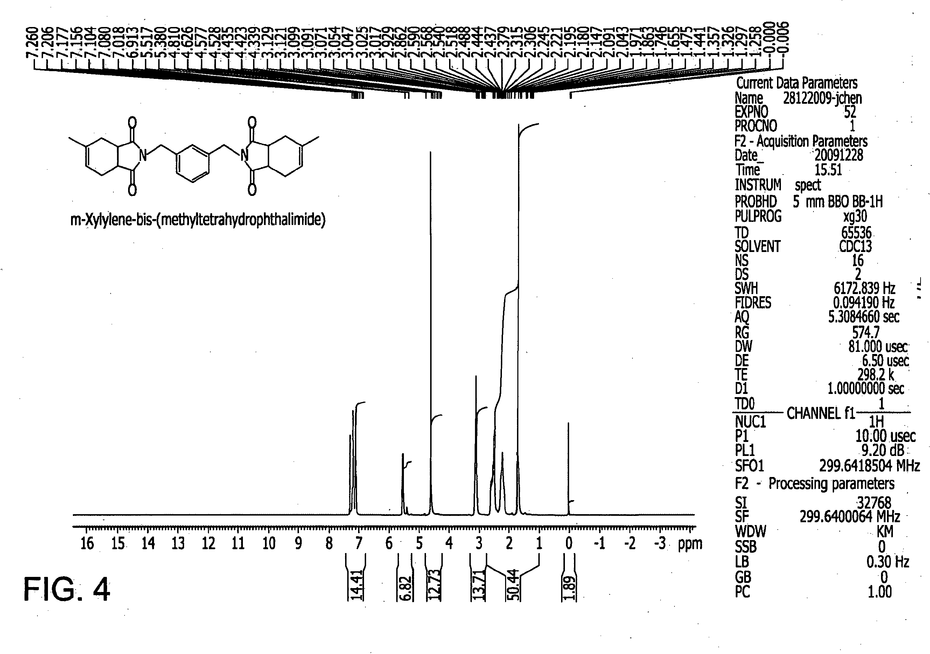

The solvent (xylene/ acetic acid mixture) from the reaction mixture was then removed by distillation under reduced pressure and the crude reaction product was dissolved in methylene chloride, washed successively with aqueous 1 N HCl solution, aqueous saturated sodium bicarbonate solution and water. The resulting methylene chloride solution was then dried over anhydrous sodium sulfate, concentrated by evaporating the solvent and purified through silica gel column. The product was then vacuum stripped to remove all of the residual methylene chloride in order to isolate 560 grams of the pure product as a thick gel/ viscous oil. As shown in FIG. 4, proton NMR confirmed the structure and purity of the product.

To illustrate its oxygen scavenging capability, a sample of MXBMT (15g) was placed in large headspace vial/ jar (932mL) into which was added a mixture of cobalt neodecanoate (2500 ppm) and n-hydroxyphthalimide (1000 ppm) as catalyst and cocatalyst respectively. The jar was sealed with a rubber septum containing cap and kept in an oven at 75°C -83°C. The oxygen content in the jar was measured periodically by withdrawing a gas sample with a syringe and analyzing it on a Mocon headspace oxygen analyzer equipment (available from MOCON Modern controls, Minneapolis, Minn.). After an initial oxygen content measurement, the subsequent measurements monitor the decrease in oxygen content due to the oxygen scavenging over a period of several days. The data from this example is listed in Table 1.

**Table 1: MXBMT Oxygen Scavenging Data**

| # Days → | 0 | 1 | 2 | 8 |
|---|---|---|---|---|
| % Oxygen content in the jar | 20.1 | 15.9 | 15.8 | 10.9 |

Note: A small amount of water (0.2g) was injected into the jar after 7 days.

The above data illustrates that MXBMT is capable of scavenging the oxygen from the air contained in the jar depleting the oxygen content from 20.1% to 10.9% in 8 days.

### Example 9: MXBC as an Oxygen Scavenger

This example illustrates the use of m-xylylene bis(citraconimide) (MXBC), also known as 1,3-bis(citraconimidomethyl) benzene (CAS#119462-56-5), as a novel oxygen scavenger additive in PET. The structure of MXBC is:

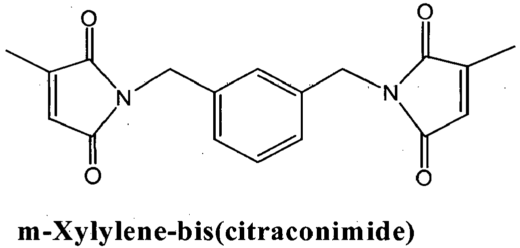

MXBC is commercially available from Flexsys U.S.A., under the tradename Perkalink 900, a rubber chemical.

99 parts by weight of dry PET pellets were tumble blended with 1 part of MXBC and 2500 ppm cobalt neodecanoate powder. The blended mixture was directly molded on injection molding machine into rectangular plaques of 15.9 cm long by 4.4cm wide and having five equal sections with increasing stepped thicknesses of 2 mm, 1.8 mm, 2.5 mm, 3.3 mm and 4 mm. The plaques were tested for oxygen scavenging by placing them (typically 7) in a 946 ml (32 oz.) glass jar containing 29.5 ml (one ounce) of water. The jar is capped with a canning jar lid having a rubber septum. The oxygen content in the jar was measured periodically by inserting a syringe needle through the septum, withdrawing a gas sample and analyzing on a Mocon headspace oxygen analyzer equipment (available from MOCON Modern Controls, Minneapolis, Minn.). After an initial oxygen content measurement the subsequent measurements monitor the decrease in oxygen content due to the oxygen scavenging over a period of several days. The data from this example is listed in Table 2 and shows a decrease in the oxygen content in the jar containing the plaques, illustrating their oxygen scavenging performance.

**Table 2: MXBC Oxygen Scavenging Data**

| # Days → | 0 | 3 | 6 | 10 | 17 | 24 |
|---|---|---|---|---|---|---|
| % Oxygen content in the jar | 20.4 | 20 | 19.9 | 19.1 | 18.4 | 18.9 |

Example 10: A mixture of 140g of m-xylylene-bis-(citraconimde), 5.6g Cobalt neodecanoate and 6854g of dry PET pellets was tumble blended. The blend was used as the barrier layer a 3-layer coinjection molded bottle preform. The 3-layer preforms were made by a sequential co-injection process consisting of 2 separate extruder feeds. In the PET feed extruder (extruder "A" heated to 260-270°C), a commercial bottle grade PET (0.85 IV PET from M&G) dried to low moisture content <10ppm was used. In the barrier resin feed extruder (extruder "B" heated to 240-260°C), the PET blend containing the oxygen scavenger (MXBC) and cobalt neodecanoate was fed into the extruder. The two melt feeds from the A & B extruders were sequentially injection molded, using a 2003 Battenfeld A800/200H/125HC co-injection molding machine into a single cavity 30g 33mm finish ketchup bottle preform to form a 3- layer preform with the middle layer of the barrier PET blend material comprising ca. 40% of the total preform weight. The cycle time for molding was 30 sec.

In a 2^{nd} step the above multilayer performs were reheat-stretch-blowmolded into multilayer bottles. In the present example, the bottles were stretch blown on a Sidel SBO-1 machine running ca.at 800 bottles per hour. In the process, the preforms were typically heated to a surface temperature of 99°C prior to the blowing operation. The blow mold temperature was 12°C. The blow pressures were 3.3 MPa (33 bar). The bottles obtained were clear and showed no major delamination failures in 6 ft angle drop tests.

### Example 11: Synthesis of m-Xylylene-bis(tetrahydrophthalimide) ('MXBT')

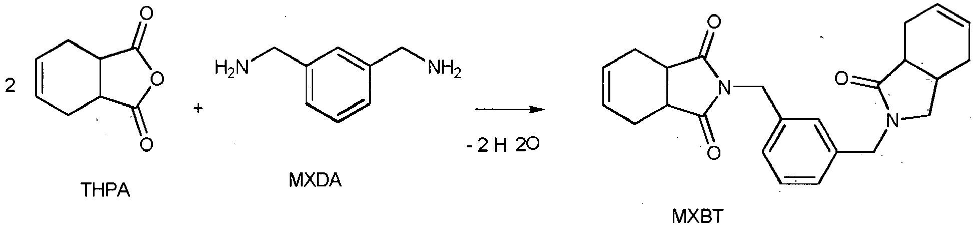

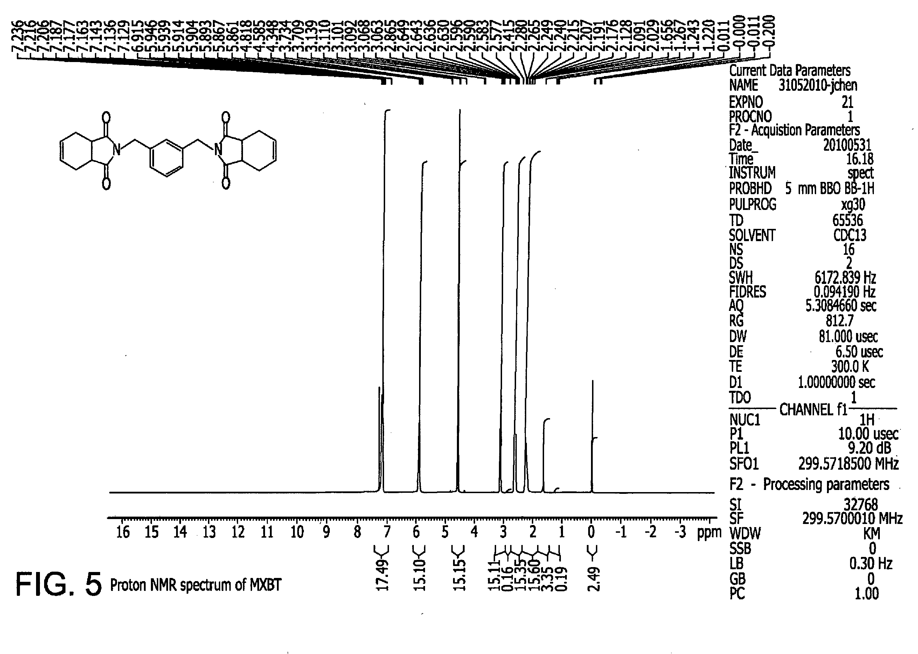

To a mixture of 1.5 liters of xylene and 1.5 liters of glacial acetic acid in a 5 liter reaction vessel equipped with a Dean-Stark trap, was added 541 grams (3.55 moles) of tetrahydrophthalic anhydride (THPA). The mixture was heated to 100-120°C. To this warm solution was added 242 grams (1.78 moles) of m-xylylene diamine (MXDA) at such a rate that the reflux remained under control. During the addition, the water/acetic acid mixture begins to separate from the xylene/acetic acid mixture in the Dean Stark trap. The addition was carried out over a total period of 30 min. After an additional 4 hrs. under reflux, TLC showed that the reaction was complete. The solvent was then evaporated under reduced pressure and the solid product was dissolved in methylene chloride, washed successively with 1 N HCl, sat. NaHCO₃, water and then dried over Na₂SO₄. The solution was then concentrated and the product recrystallized as a white solid (yield: 550g). As shown in FIG. 5, the proton NMR confirmed the structure and high purity (>99%) of MXBT.

### Examples 12 to18: Injection Molding and Oxygen Scavenging Measurement of PET-MXBT Blend Plaques

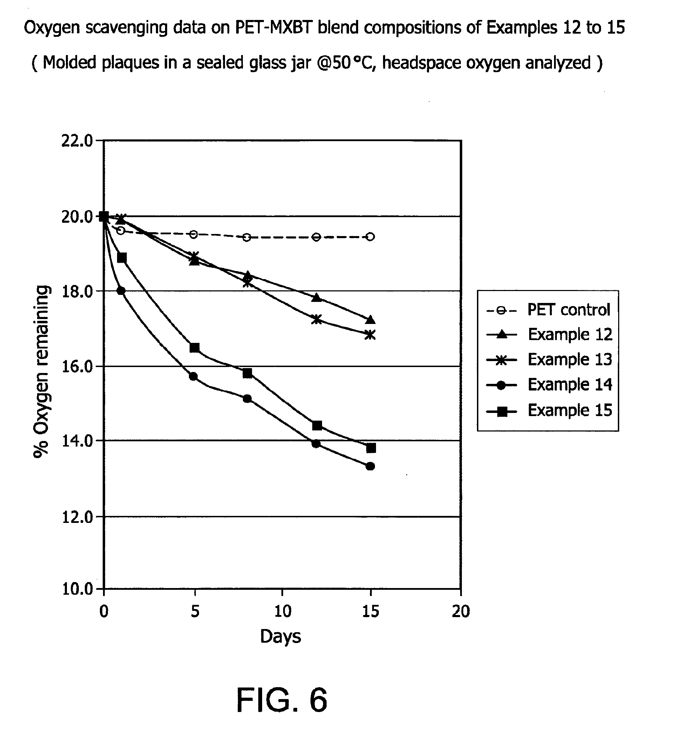

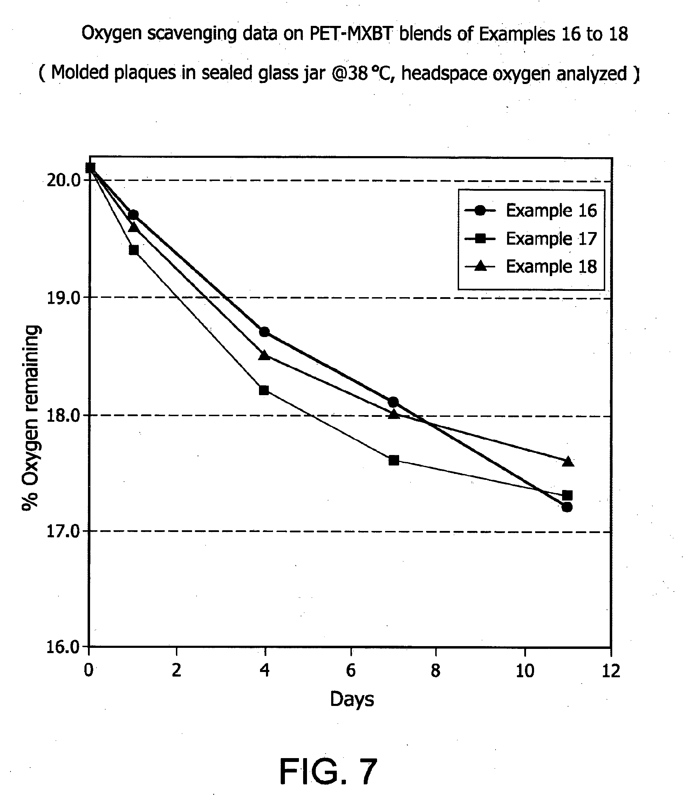

Commercial bottle grade PET pellets (Heatwave CF746, Eastman) were thoroughly dried and then tumble blended with various levels of MXBT (from Example 11) and cobalt neodecanoate as catalyst and including an optional activating compound such as N-hydroxy phthalimide, low molecular weight polyethyleneglycol diester (Tegmer 609 from Hallstar) or a low molecular weight polyvinylpyrrolidone (Luvitek, from BASF). The specific compositions of Ex. 12-18, are shown in Table 3. In each case, the blended PET-MXBT mixture was directly molded on injection molding machine into rectangular plaques of 15.9 cm long by 4.4cm wide and having five equal sections with increasing stepped thicknesses of 2 mm, 1.8 mm, 2.5 mm, 3.3 mm and 4 mm. The plaques were tested for oxygen scavenging by placing them (typically 7) in a 946 ml (32 oz.) glass jar containing 29.5 ml (one ounce) of water. The jar is capped with a canning jar lid having a rubber septum. The oxygen content in the jar was measured periodically by inserting a syringe needle through the septum, withdrawing a gas sample and analyzing on a Mocon headspace oxygen analyzer equipment (MOCON Modern Controls, Minneapolis, Minn.). After an initial oxygen content measurement the subsequent measurements monitor the decrease in oxygen content due to the oxygen scavenging over a period of several days. The oxygen scavenging data as shown in FIGS. 6 and 7 clearly illustrates the excellent oxygen scavenging performance of MXBT in PET matrix as compared to the PET control.

**Table 3: PET-MXBT Blend Compositions for Plaque Molding and Oxygen Scavenging Tests**

| **Example** | **Molded Plaque Composition** | **Scavenging Test Temperature (°C)** |
|---|---|---|
| 12 | PET + 3%MXBT + 0.1% CoNeo +0.5%NHPI | 50 |
| 13 | PET + 3% MXBT + 0.1% CoNeo +1% PVP | 50 |
| 14 | PET + 6%MXBT + 0.1% CoNeo + 0.5%NHPI | 50 |
| 15 | PET +6%MXBT + 0.1%CoNeo + 1% PVP | 50 |
| 16 | PET +4%MXBT +0.1% CoNeo | 38 |
| 17 | PET +4%MXBT +0.1% CoNeo + 1%Tegmer 609 | 38 |
| 18 | PET +4%MXBT +0.1% CoNeo + 0.3%NHPI | 38 |

The foregoing examples and description of the preferred embodiments should be taken as illustrating, rather than as limiting the present invention as defined by the claims. As will be readily appreciated, numerous variations and combinations of the features set forth above can be utilized without departing from the present invention as set forth in the claims. Such variations are not regarded as a departure from the scope of the invention, and all such variations are intended to be included within the scope of the following claims.

## Claims

1. A composition comprising:
a) a polyester base polymer;
b) at least one non-polymeric oxidizable organic compound selected from the group consisting of: a compound of formula (I) or (II): 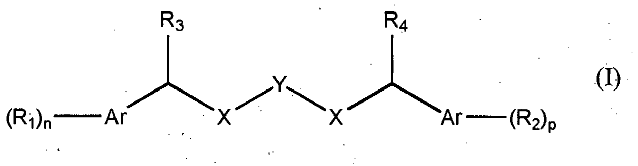 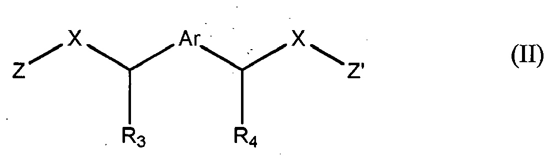 wherein,
Ar is aryl or heteroaryl;
X is 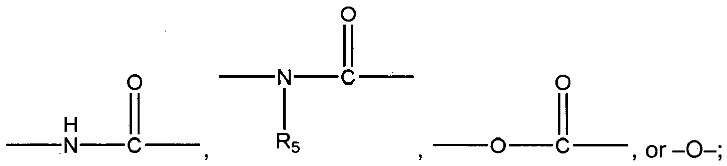 Y is alkylene, cycloalkylene, or arylene;
R₁ and R₂ are each independently H or alkyl;
R₃ and R₄ are each independently H, alky, cycloalkyl, aryl, or aralkyl; R₅ is alkyl, cycloalkyl, or aryl;
Z and Z' are each independently H, alkyl, cycloalkyl, aryl, or aralkyl; and
n and p are each independently 0, 1, 2, 3, 4; or 5;
and a compound of Formula III or IV: 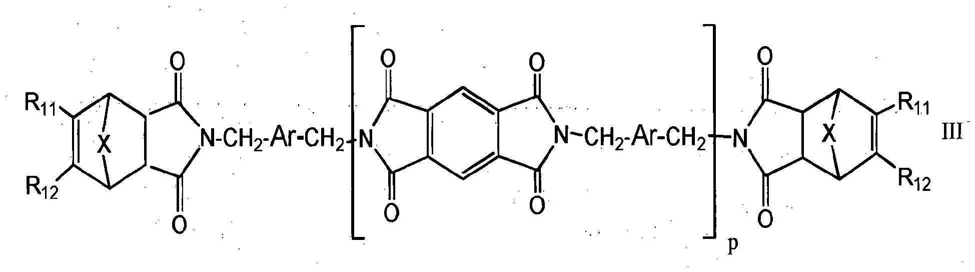 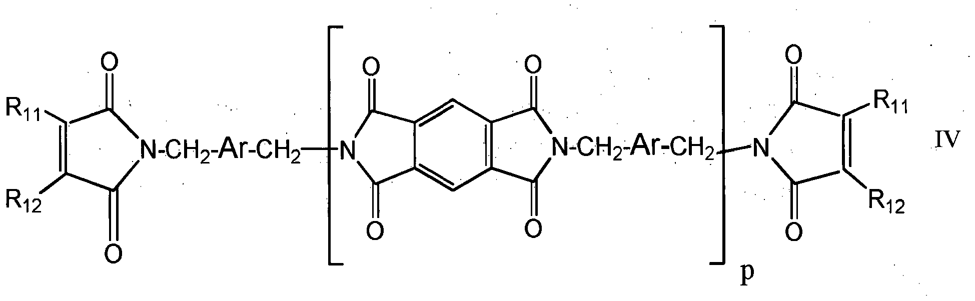 wherein,
Ar is an o-, m-, or p-phenylene moiety, a substituted phenylene moiety, or a naphthalene moiety;
R₁₁ and R₁₂ are independently selected from the group consisting of: hydrogen, alkyl, alkenyl, and aryl;
X is O or - (CH₂)ₙ-;
n = 0, 1, or 2; and
p = 0, 1, or 2;
c) at least one transition metal in a positive oxidation state, said metal being present in the composition in an amount of from 10 to 400 ppm; and
d) at least one activator compound selected from the group consisting of:
(i) a polyester ionomer containing a sulfoisophthalate moiety,
(ii) a polyol derivative, and
(iii) a N-hydroxyimide,
wherein the at least one non-polymeric oxidizable organic compound is present in an amount of from 0.10 to 10 weight percent of the composition, and wherein the at least one activator compound is present in an amount of from 0.01 to 5 weight percent of the composition.

2. The composition of claim 1 wherein the at least one non-polymeric oxidizable organic compound is:
the compound of formula (I), which is dibenzyl adipamide; or
the compound of Formula III, which is m-xylylene-bis(tetrahydrophthalimide).

3. The composition of claim 1, wherein said at least one transition mental is cobalt.

4. The composition of claim 1 wherein the polyester base polymer is polyethylene terephthalate.

5. The composition of claim 1 wherein the non-polymeric oxidizable organic compound is present in an amount of 1 to 10 weight percent based on the weight of the composition; preferably
in an amount of 1 to 5 weight percent based on the weight of the composition; more preferably
in an amount of 1 to 3 weight percent based on the weight of the composition.

6. The composition of claim 1 wherein the concentration of transition metal is 30 to 150 ppm.

7. The composition of claim 1 wherein the activator compound is a polyol derivative; preferably
the polyol derivative is a dialkyl-ether di-alkylester or a polyalkylene-ether di-alkylester.

8. The composition of claim 1 wherein the activator compound is a N-hydroxyimide; preferably
the N-hydroxyimide is a compound of formula (V): 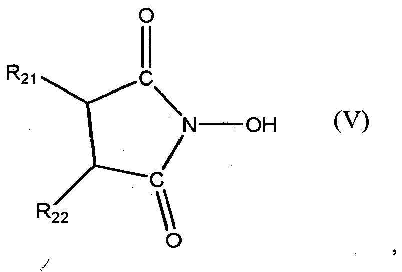 wherein R₂₁ and R₂₂ each independently may be a hydrogen atom or an organic group. R₂₁ and R₂₂ may form a ring together with the carbon atoms to which they are bonded. R₂₁ and/or R₂₂ may form a carbon-carbon double bond with the carbon atoms to which they are bonded; more preferably
the N-hydroxylimide is selected from the group consisting of: N-hydroxysuccinimide, N-hydroxymaleimide, N,N'-dihydroxycyclohexanetetracarboxylic diimide, N-hydroxyphthalimide, N-hydroxytetrachlorophthalimide, N-hydroxytetrabromophthalimide, N-hydroxyhexahydrophthalimide, 3-sulfonyl-N-hydroxyphthalimide, 3-methoxycarbonyl-N-hydroxyphthalimide, 3-methyl-N-hydroxyphthalimide, 3-hydroxy-N-hydroxyphthalimide, 4-nitro-N-hydroXyphthalimide, 4-chloro-N-hydroxyphthalimide, 4-methoxy-N-hydroxyphthalimide, 4-dimethylamino-N-hydroxyphthalimide, 4-carboxy-N-hydroxyhexahydrophthalimide, 4-methyl-N-hydroxyhexahydrophthalimide, N-hydroxy het acid imide, N-hydroxy hymic imide, N-hydroxytrimellitic imide, N,N-dihydroxy pyromellitic diimide, and mixtures thereof; most preferably the N-hydroxylimide is N-hydroxyphthalimide.

9. The composition of claim 1 wherein the activator compound is a polyester ionomer containing a sulfoisophthalate moiety; preferably
the polyester ionomer containing a sulfoisophthalate moiety is a PET copolymer modified with 5-sulfoisophthalic acid sodium salt as comonomer (A) or an amorphous copolyester of diethylene glycol, isophthalic acid and sodium 5-sulfoisophthalate (B):

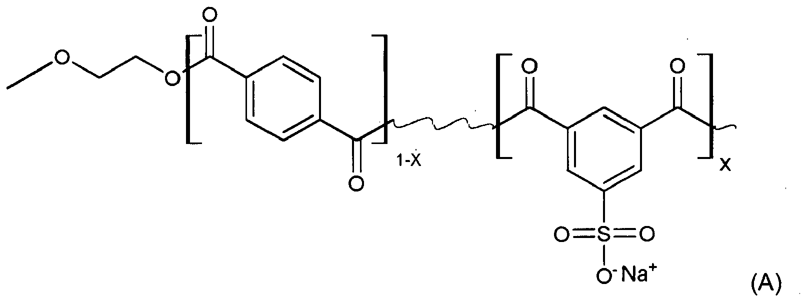

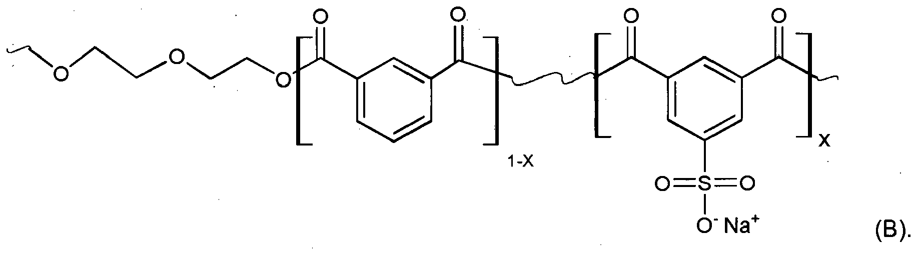

10. The composition of claim 1 wherein the at least one non-polymeric oxidizable organic compound is selected from the group consisting of: m-xylylene-bis-(tetrahydrophthalimide), m-xylylene-bis-(methyltetrahydrophthalimide), m-xylylene-bis-(octenyl succinimide), m-xylylene-bis-citraconimide, m-xylylene-bis(methylnadimide), and m-xylylene-bis(nadimide); preferably
the non-polymeric oxidizable organic compound is dibenzyl adipamide and the activator compound is N-hydroxyphthalimide.

11. A wall for a package comprising at least one layer, said layer comprising a composition of claims 1-10.

12. The wall of claim 11 wherein the package is a monolayer container.

13. The wall of claim 11 wherein the package is a multilayer container.

## Patentansprüche

1. Zusammensetzung umfassend:
a) ein Polyester-Basispolymer;
b) mindestens eine nicht-polymere oxidierbare organische Verbindung, ausgewählt aus der Gruppe bestehend aus: einer Verbindung mit Formel (I) oder (II): 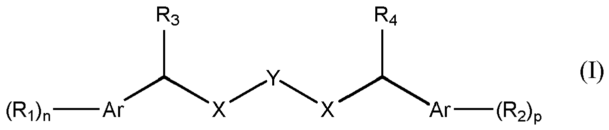 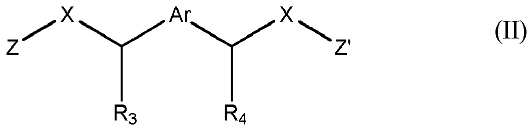 wobei,
Ar Aryl oder Heteroaryl ist;
X 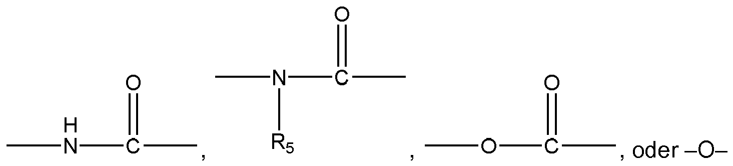 ist;
Y Alkylen, Cycloalkylen oder Arylen ist;
R₁ und R₂ jeweils unabhängig H oder Alkyl sind;
R₃ und R₄ jeweils unabhängig H, Alky, Cycloalkyl, Aryl oder Aralkyl sind; R₅ Alkyl, Cycloalkyl oder Aryl ist;
Z und Z' jeweils unabhängig H, Alkyl, Cycloalkyl, Aryl oder Aralkyl sind; und
n und p jeweils unabhängig 0, 1, 2, 3, 4 oder 5 sind;
und eine Verbindung mit Formel III oder IV: 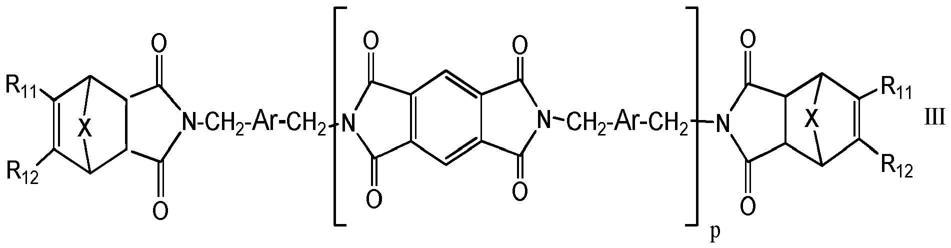 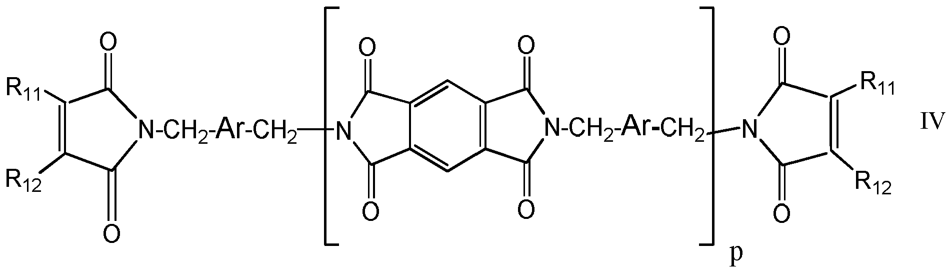 wobei,
Ar eine o-, m- oder p-Phenylen-Einheit, eine substituierte Phenylen-Einheit oder eine Naphthalin-Einheit ist;
R₁₁ und R₁₂ unabhängig ausgewählt sind aus der Gruppe, bestehend aus: Wasserstoff, Alkyl, Alkenyl und Aryl;
X O oder - (CH₂)ₙ- ist;
n = 0, 1 oder 2 ist; und
p = 0, 1 oder 2 ist;
c) mindestens ein Übergangsmetall in einem positiven Oxidationszustand, wobei das Metall in der Zusammensetzung in einer Menge von etwa 10 bis 400 ppm vorliegt; und
d) mindestens eine Aktivator-Verbindung ausgewählt aus der Gruppe, bestehend aus:
(i) einem Polyesterionomer, enthaltend eine Sulfoisophthalat-Einheit,
(ii) einem Polyolderivat, und
(iii) einem N-Hydroxyimid,
wobei die mindestens eine nicht-polymere oxidierbare organische Verbindung in einer Menge von 0,10 bis 10 Gewichtsprozent der Zusammensetzung vorliegt, und wobei die mindestens eine Aktivator-Verbindung in einer Menge von 0,01 bis 5 Gewichtsprozent der Zusammensetzung vorliegt.

2. Zusammensetzung nach Anspruch 1, wobei die mindestens eine nicht-polymere oxidierbare organische Verbindung ist:
die Verbindung mit Formel (I), welche Dibenzyladipamid ist; oder
die Verbindung mit Formel III, welche m-Xylylen-bis(tetrahydrophthalimid) ist.

3. Zusammensetzung nach Anspruch 1, wobei mindestens ein Übergangsmetall Kobalt ist.

4. Zusammensetzung nach Anspruch 1, wobei das Polyester-Basispolymer Polyethylenterephthalat ist.

5. Zusammensetzung nach Anspruch 1, wobei die nicht-polymere oxidierbare organische Verbindung in einer Menge von 1 bis 10 Gewichtprozent, basierend auf dem Gewicht der Zusammensetzung vorliegt;
vorzugsweise
in einer Menge von 1 bis 5 Gewichtsprozent, basierend auf dem Gewicht der Zusammensetzung;
bevorzugter
in einer Menge von 1 bis 3 Gewichtsprozent, basierend auf dem Gewicht der Zusammensetzung.

6. Zusammensetzung nach Anspruch 1, wobei die Konzentration des Übergangmetalls 30 bis 150 ppm beträgt

7. Zusammensetzung nach Anspruch 1, wobei die Aktivator-Verbindung ein Polyolderivat ist;
vorzugsweise
ist das Polyolderivat ein Dialkyl-ether-di-alkylester oder ein Polyalkylen-ether-di-alkylester.

8. Zusammensetzung nach Anspruch 1, wobei die Aktivator-Verbindung ein N-hydroxyimid ist;
vorzugsweise
ist das N-Hydroxyimid eine Verbindung mit Formel (V): 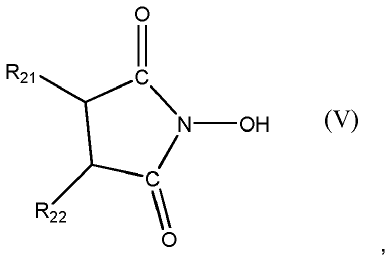 wobei R₂₁ und R₂₂ jeweils unabhängig ein Wasserstoffatom oder eine organische Gruppe sein können. R₂₁ und R₂₂ können zusammen mit den Kohlenstoffatomen, an welche sie gebunden sind, einen Ring bilden. R₂₁ und/oder R₂₂ können eine Kohlenstoff-Kohlenstoff-Doppelbindung mit den Kohlenstoffatomen bilden, an welche sie gebunden sind; bevorzugter
ist das N-Hydroxylimid aus der Gruppe ausgewählt, bestehend aus: N-Hydroxysuccinimid, N-Hydroxymaleimid, N,N'-Dihydroxycyclohexantetracarboxyldümid, N-Hydroxyphthalimid, N-Hydroxytetrachlorphthalimid, N-Hydroxytetrabromphthalimid, N-Hydroxyhexahydrophthalimid, 3-Sulfonyl-N-hydroxyphthalimid, 3-Methoxycarbonyl-N-hydroxyphthalimid, 3-Methyl-N-hydroxyphthalimid, 3-Hydroxy-N-hydroxyphthalimid, 4-Nitro-N-hydroxyphthalimid, 4-Chlor-N-hydroxyphthalimid, 4-Methoxy-N-hydroxyphthalimid, 4-Dimethylamino-N-hydroxyphthalimid, 4-Carboxy-N-hydroxyhexahydrophthalimid, 4-Methyl-N-hydroxyhexahydrophthalimid, N-Hydroxy-hetsäureimid, N-Hydroxyhymimid, N-Hydroxytrimellitimid, N,N-Dihydroxypyromellitdiimide und Mischungen davon; am bevorzugtesten ist das N-Hydroxylimid N-Hydroxyphthalimid.

9. Zusammensetzung nach Anspruch 1, wobei die Aktivator-Verbindung ein Polyesterionomer ist, das eine Sulfoisophthalat-Einheit enthält; vorzugsweise ist das Polyesterionomer, das eine Sulfoisophthalat-Einheit enthält, ein PET-Copolymer, modifiziert mit 5-Sulfoisophthalsäure-Natriumsalz als Comonomer (A) oder einem amorphen Copolyester von Diethylenglycol, Isophthalsäure und Natrium-5-sulfoisophthalat (B):

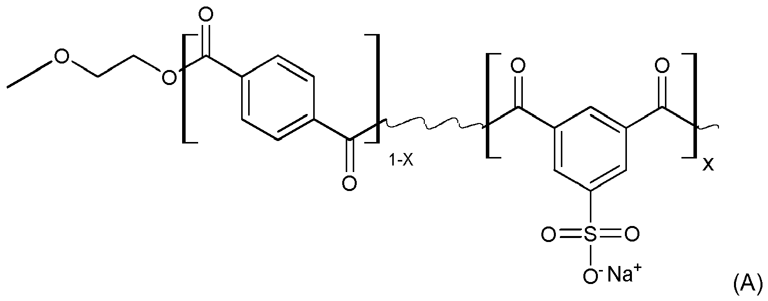

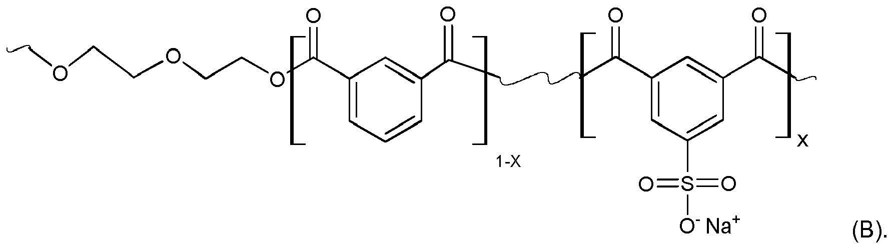

10. Zusammensetzung nach Anspruch 1, wobei die mindestens eine nicht-polymere oxidierbare organische Verbindung aus der Gruppe ausgewählt ist, bestehend aus: m-Xylylen-bis-(tetrahydrophthalimid), m-Xylylen-bis-(methyltetrahydrophthalimid), m-Xylylen-bis-(octenylsuccinimid), m-Xylylen-bis-citraconimid, m-Xylylen-bis(methylnadimid) und m-Xylylen-bis(nadimid); vorzugsweise
ist die nicht-polymere oxidierbare organische Verbindung Dibenzyladipamid und die Aktivator-Verbindung ist N-Hydroxyphthalimid.

11. Wand für eine Verpackung, umfassend mindestens eine Schicht, wobei die Schicht eine Zusammensetzung aus Ansprüchen 1-10 umfasst.

12. Wand aus Anspruch 11, wobei die Verpackung ein einschichtiger Behälter ist.

13. Wand aus Anspruch 11, wobei die Verpackung ein mehrschichtiger Behälter ist.

## Revendications

1. Composition comprenant :
a) un polymère à base de polyester ;
b) au moins un composé organique oxydable non polymérique choisi dans le groupe constitué de : un composé de formule (I) ou (II) : 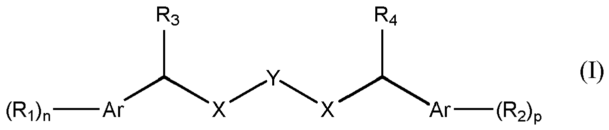 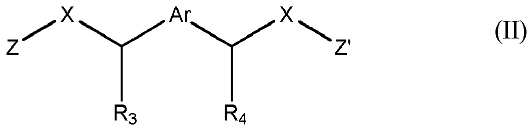 dans lesquelles,
Ar est aryle ou hétéroaryle ;
X est 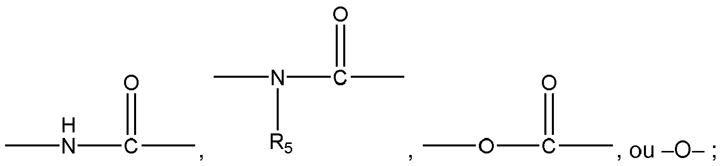 Y est alkylène, cycloalkylène, ou arylène ;
R₁ et R₂ sont chacun indépendamment l'un de l'autre H ou alkyle ;
R₃ et R₄ sont chacun indépendamment l'un de l'autre H, alkyle, cycloalkyle, aryle, ou aralkyle ;
R₅ est alkyle, cycloalkyle, ou aryle ;
Z et Z' sont chacun indépendamment l'un de l'autre H, alkyle, cycloalkyle, aryle, ou aralkyle ; et
n et p sont chacun indépendamment l'un de l'autre 0, 1, 2, 3, 4, ou 5 ;
et un composé de formule III ou IV : 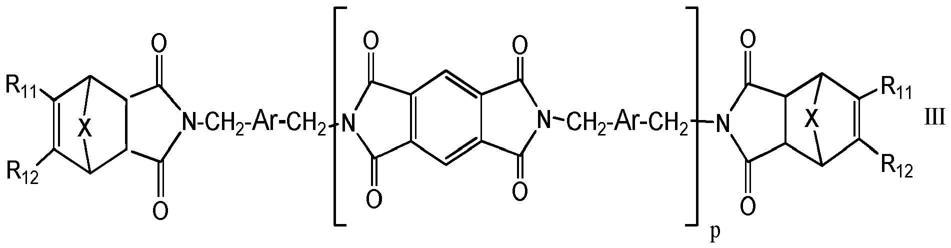 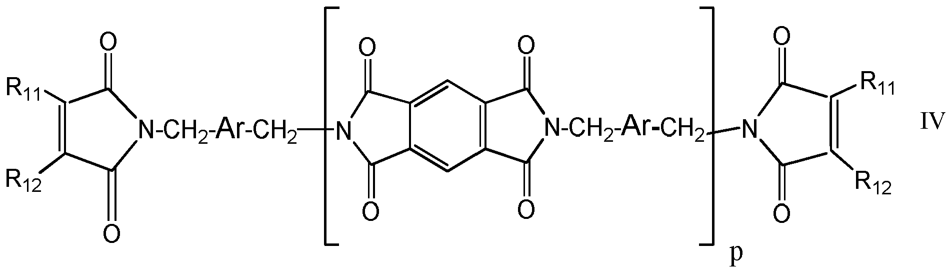 dans lesquelles,
Ar est une fraction o-, m-, ou p-phénylène, une fraction phénylène substituée, ou une fraction naphtalène ;
R₁₁ et R₁₂ sont indépendamment choisis dans le groupe constitué de : hydrogène, alkyle, alcényle et aryle ;
X est O ou -(CH₂)ₙ- ;
n = 0, 1, ou 2 ; et
p = 0, 1, ou 2 ;
c) au moins un métal de transition dans un état d'oxydation positif, ledit métal étant présent dans la composition dans une quantité de 10 à 400 ppm ; et
d) au moins un composé activateur choisi dans le groupe constitué de :
(i) un ionomère de polyester contenant une fraction sulfoisophtalate,
(ii) un dérivé de polyol, et
(iii) un N-hydroxyimide,
dans laquelle le au moins un composé organique oxydable non polymérique est présent dans une quantité de 0,10 à 10 pour cent en poids de la composition, et dans laquelle le au moins un composé activateur est présent dans une quantité de 0,01 à 5 pour cent en poids de la composition.

2. Composition selon la revendication 1, dans laquelle le au moins un composé organique oxydable non polymérique est :
le composé de formule (I), qui est le dibenzyl adipamide ; ou
le composé de formule III, qui est le m-xylylène-bis(tétrahydrophtalimide).

3. Composition selon la revendication 1, dans laquelle ledit au moins un métal de transition est le cobalt.

4. Composition selon la revendication 1 dans laquelle le polymère à base de polyester est le poly(téréphtalate d'éthylène).

5. Composition selon la revendication 1, dans laquelle le composé organique oxydable non polymérique est présent dans une quantité de 1 à 10 pour cent en poids sur la base du poids de la composition ; de préférence
dans une quantité de 1 à 5 pour cent en poids sur la base du poids de la composition ; de manière davantage préférée
dans une quantité de 1 à 3 pour cent en poids sur la base du poids de la composition.

6. Composition selon la revendication 1, dans laquelle la concentration en métal de transition est de 30 à 150 ppm.

7. Composition selon la revendication 1, dans laquelle le composé activateur est un dérivé de polyol ; de préférence
le dérivé de polyol est un dialkyl-éther di-alkylester ou un polyalkylène-éther di-alkylester.

8. Composition selon la revendication 1, dans laquelle le composé activateur est un N-hydroxyimide ; de préférence
le N-hydroxyimide est un composé de formule (V) : 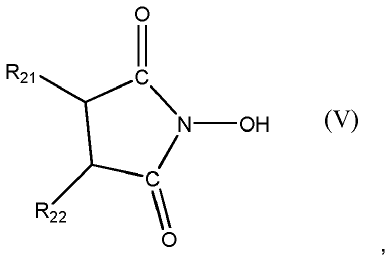 dans laquelle R₂₁ et R₂₂ peuvent chacun indépendamment l'un de l'autre être un atome d'hydrogène ou un groupe organique. R₂₁ et R₂₂ peuvent former un cycle conjointement avec les atomes de carbone auxquels ils sont liés. R₂₁ et/ou R₂₂ peuvent former une double liaison carbone-carbone avec les atomes de carbone auxquels ils sont liés ; de manière davantage préférée
le N-hydroxylimide est choisi dans le groupe constitué de : N-hydroxysuccinimide, N-hydroxymaléimide, diimide de N,N'-dihydroxycyclohexanetétracarboxylique, N-hydroxyphtalimide, N-hydroxytétrachlorophtalimide, N-hydroxytétrabromophtalimide, N-hydroxyhexahydrophtalimide, 3-sulfonyl-N-hydroxyphtalimide, 3-méthoxycarbonyl-N-hydroxyphtalimide, 3-méthyl-N-hydroxyphtalimide, 3-hydroxy-N-hydroxyphtalimide, 4-nitro-N-hydroxyphtalimide, 4-chloro-N-hydroxyphtalimide, 4-méthoxy-N-hydroxyphtalimide, 4-diméthylamino-N-hydroxyphtalimide, 4-carboxy-N-hydroxyhexahydrophtalimide, 4-méthyl-N-hydroxyhexahydrophtalimide, imide d'acide N-hydroxy het, imide N-hydroxy hymique, imide N-hydroxytrimellitique, diimide N,N-dihydroxypyromellitique, et leurs mélanges ; de manière préférée entre toutes
le N-hydroxylimide est le N-hydroxyphtalimide.

9. Composition selon la revendication 1 dans laquelle le composé activateur est un ionomère de polyester contenant une fraction sulfoisophtalate ; de préférence l'ionomère de polyester contenant une fraction sulfoisophtalate est un copolymère de PET modifié avec un sel de sodium d'acide 5-sulfoisophtalique en tant que comonomère (A) ou un copolyester amorphe de diéthylène glycol, d'acide isophtalique et de 5-sulfoisophtalate de sodium (B) :

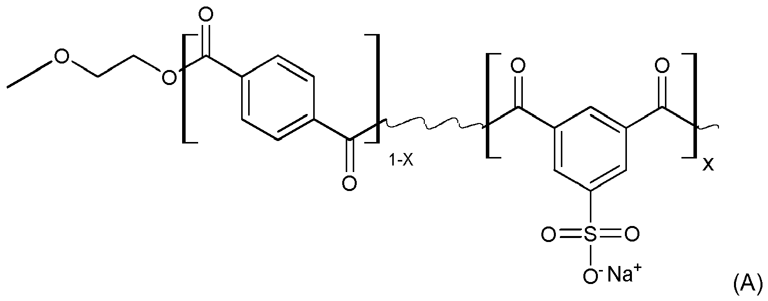

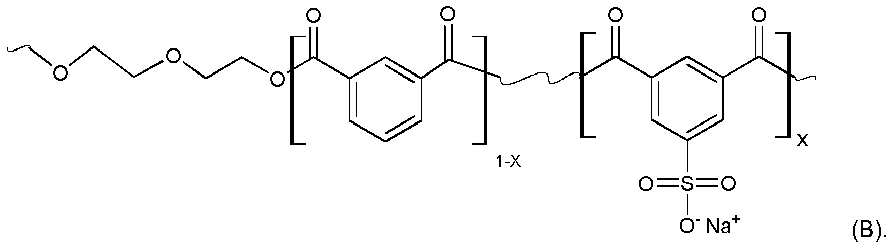

10. Composition selon la revendication 1, dans laquelle le au moins un composé organique oxydable non polymérique est choisi dans le groupe constitué de : m-xylylène-bis-(tétrahydrophtalimide), m-xylylène-bis-(méthyltétrahydrophtalimide), m-xylylène-bis-(octényl succinimide), m-xylylène-bis-citraconimide, m-xylylène-bis(méthylnadimide), et m-xylylène-bis(nadimide) ; de préférence
le composé organique oxydable non polymérique est le dibenzyl adipamide et le composé activateur est le N-hydroxyphtalimide.

11. Paroi pour un emballage comprenant au moins une couche, ladite couche comprenant une composition des revendications 1 à 10.

12. Paroi selon la revendication 11, dans laquelle l'emballage est un contenant monocouche.

13. Paroi selon la revendication 11, dans laquelle l'emballage est un contenant multicouche.
